(19) Europäisches Patentamt / European Patent Office / Office européen des brevets

(11) EP 2 935 381 B1

(12) EUROPÄISCHE PATENTSCHRIFT

(45) Veröffentlichungstag und Bekanntmachung des Hinweises auf die Patenterteilung:
**21.03.2018 Patentblatt 2018/12**

(21) Anmeldenummer: **13814099.1**

(22) Anmeldetag: **18.12.2013**

(51) Int Cl.:
***C08G 2/38*** (2006.01) ***C08G 18/48*** (2006.01)
***C08G 18/56*** (2006.01) ***C08G 65/16*** (2006.01)
***C08G 65/331*** (2006.01) ***C08G 65/332*** (2006.01)

(86) Internationale Anmeldenummer:
**PCT/EP2013/077049**

(87) Internationale Veröffentlichungsnummer:
**WO 2014/095971 (26.06.2014 Gazette 2014/26)**

(54) **FUNKTIONALISIERTE POLYOXYMETHYLEN-BLOCK-COPOLYMERE**
FUNCTIONALIZED POLYOXYMETHYLENE BLOCK COPOLYMERS
COPOLYMÈRES GREFFÉS POLYOXYMÉTHYLÈNE FONCTIONNALISÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 EP 12199053**

(43) Veröffentlichungstag der Anmeldung:
**28.10.2015 Patentblatt 2015/44**

(73) Patentinhaber: **Covestro Deutschland AG**
**51373 Leverkusen (DE)**

(72) Erfinder:
- **MÜLLER, Thomas Ernst**
  **52062 Aachen (DE)**
- **GÜRTLER, Christoph**
  **50735 Köln (DE)**
- **LEITNER, Walter**
  **52074 Aachen (DE)**
- **VOGT, Henning**
  **52066 Aachen (DE)**
- **BARATH, Gabor**
  **52076 Aachen (DE)**

(74) Vertreter: **Levpat**
**c/o Covestro AG**
**Gebäude 4825**
**51365 Leverkusen (DE)**

(56) Entgegenhaltungen:
**GB-A- 807 589** **JP-A- 2007 211 082**
**US-A- 3 218 295** **US-A- 3 979 479**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 935 381 B1

## Beschreibung

Die vorliegende Erfindung betrifft ein Verfahren zur Herstellung von funktionalisierten Polyoxymethylen-Block-Copolymeren, umfassend den Schritt der Polymerisation von Formaldehyd in einem Reaktionsgefäß in Gegenwart eines Katalysators, wobei die Polymerisation von Formaldehyd weiterhin in Gegenwart einer Starterverbindung mit mindestens 2 Zerewitinoff-aktiven H-Atomen unter Erhalt eines Zwischenprodukts erfolgt und dieses Zwischenprodukt mit zyklischen Carbon- oder Kohlensäureestern zu funktionalisierten Polyoxymethylen-Block-Copolymeren umgesetzt wird. Sie betrifft weiterhin durch ein solches Verfahren erhältliche funktionalisierte Polyoxymethylen-Block-Copolymere sowie deren Verwendung.

JP 2007 211082 A beschreibt die Umsetzung von Polyoxyalkylen-Polyolen mit einem Äquivalentgewicht von $\geq$ 2500 mit Formaldehyd, Formaldehyd-Oligomeren oder Formaldehyd-Polymeren zu Polyoxymethylen-Polyoxyalkylen-Block-Copolymeren. Aufgrund des hohen Molekulargewichtes der eingesetzten Polyoxyalkylen-Polyole weisen die erhaltenen Polyoxymethylen-Polyoxyalkylen-Block-Copolymere ein Molekulargewicht > 5000 g/mol auf und sind daher nicht als Polyurethan-Baustein geeignet.

GB 807589 beschreibt Block-Copolymere, enthaltend Polyoxymethylen-Einheiten neben anderen Polymerisat- und Polykondensat-Einheiten. Die beschriebenen Block-Copolymere weisen ebenfalls ein Molekulargewicht $\geq$ 4500 g/mol auf. Jedoch sind Polymere mit hohem Molekulargewicht für den Einsatz als Polyurethan- oder Polyamidbaustein nicht geeignet. US 3,979,479 offenbart ein zweistufiges Verfahren zur Herstellung von speziellen Block-Copolymeren enthaltend Polyoxymethylen-Blöcke neben Polylacton- und Polylactam-Blöcken.

In JP 2007 211082, GB 807589 und US 3,979,479 wird eine Stabilisierung der terminalen OH-Gruppen der Zwischenprodukte durch Acylierung mit Essigsäureanhydrid beschrieben. Die hergestellten Block-Copolymere enthalten somit als Endgruppen Acetat-Reste, so dass eine weitere Umsetzung zu Polyurethanen, Polyamiden oder Polyesteramiden nicht möglich ist.

US 3,218,295 offenbart ebenfalls Block-Copolymere enthaltend Polyoxymethylen-Blöcke, wobei die Zwischenprodukte mit Essigsäureanhydrid umgesetzt werden. Eine weitere Umsetzung der Produkte ist jedoch nicht möglich, da nur unreaktive Acetat-Endgruppen vorhanden sind.

EP 1 418 190 A1 beschreibt Copolymere aus Polyetherdiolen und Formaldehyd mit einem Molekulargewicht $\geq$ 15 000 g/mol. Auch diese Polymere sind auf Grund des hohen Molekulargewichts für den Einsatz als Polyurethanbaustein nicht geeignet.

US 3,754,053 beschreibt Block-Copolymere mit einem Molekulargewicht $\geq$ 10000 g/mol, enthaltend mindestens ein Polyoxymethylen-Segment und mindestens zwei Polyoxyalkylen-Segmente. Die beschriebenen Block-Copolymere sind grundsätzlich auf eine maximale Funktionalität von $F \leq 2$ beschränkt. Für die Polyurethan-Anwendungen ist jedoch neben Polymeren mit einer Funktionalität von F = 2 besonders auch der Zugang zu Polymeren mit einer Funktionalität F > 2 interessant. Auch hier sind die beschriebenen Polymere aufgrund ihres hohen Molekulargewichts für Anwendungen als Polyurethanbaustein ungeeignet.

In US 2002/0016395 und JP 04-306215 werden Block-Copolymere beschrieben, die Polyoxymethylen-Einheiten und Polyolefin-Einheiten enthalten. Auch hier besitzen die erfindungsgemäßen Produkte Molekulargewichte $\geq$ 10 000 g/mol und sind somit für den Einsatz als Polyurethanbaustein ungeeignet.

Alle beschriebenen Polyoxymethylen-haltigen Block-Copolymere weisen Molekulargewichte von $\geq$ 4 500 g/mol auf und sind aufgrund der hiermit einhergehenden Eigenschaften (hohe Viskosität, niedrige massenbezogene Funktionalität) nicht für den Einsatz als Präpolymere im Polyurethanbereich geeignet. Ebenfalls werden die mechanischen Eigenschaften der daraus hergestellten Polyurethane bei Einsatz von hochmolekularen Diolen und Polyolen herabgesetzt.

Weiterhin geht aus den oben genannten Offenbarungen hervor, dass eine Stabilisierung von Polyoxymethylen-Block-Copolymere durch Acylierung mit Essigsäureanhydrid erreicht werden kann. Durch die Stabilisierung mit Essigsäureanhydrid werden jedoch unreaktive Endgruppen eingeführt, welche für eine weitere Umsetzung zu Polyurethanen, Polyamiden oder Polyesteramiden ungeeignet sind. Ferner führt die Umsetzung mit Essigsäureanhydrid zur Freisetzung von Essigsäure, welche als Nebenprodukt aus dem Produktgemisch entfernt werden muss.

Niedermolekulare bi- oder höherfunktionelle Block-Copolymere, die Polyoxymethylen-Einheiten neben anderen oligomeren Struktureinheiten sowie Carbonsäure- oder Hydroxy-funktionalisierte Endgruppen enthalten, sind nicht bekannt.

US 3,575,930 beschreibt die Reaktion von Dihydroxy-terminiertem Paraformaldehyd $HO(CH_2O)_nH$ mit n = 2-64 mit Diisocyanaten zu Isocyanat-terminierten Polyoxymethylenpolymeren, welche in der Reaktion mit Diolen zu Polyurethanen umgesetzt werden können. Das eingesetzte Paraformaldehyd unterscheidet sich aufgrund des Fehlens zusätzlicher oligomerer Einheiten und seiner hohen Teilkristallinität grundsätzlich von den erfindungsgemäßen Polyoxymethylen-Block-Copolymeren, was sich in physikalischen Eigenschaften wie Glasübergangstemperatur, Schmelzpunkt und Viskosität niederschlägt.

Der Einsatz von Carbonsäure- oder Hydroxy-funktionalisierten Polyoxymethylen-Block-Copolymeren in der

Reaktion mit Isocyanaten oder Oxazolinen ist hingegen nicht bekannt.

Es bestand daher die Aufgabe, niedermolekulare Polyoxymethylen-Block-Copolymere bereitzustellen, die stabile Carbonsäure- oder Hydroxy-funktionalisierte Endgruppen aufweisen und dadurch für die Reaktion mit Di- oder Polyisocyanaten bzw. Bis- oder Polyoxazolinen geeignet sind, und deren durchschnittliche Funktionalität F auf einen Wert $\geq 2$ eingestellt werden kann.

Erfindungsgemäß gelöst wurde diese Aufgabe durch ein Verfahren zur Herstellung von funktionalisierten Polyoxymethylen-Block-Copolymeren, umfassend den Schritt der Polymerisation von Formaldehyd in einem Reaktionsgefäß in Gegenwart eines Katalysators, in dem die Polymerisation von Formaldehyd weiterhin in Gegenwart einer Starterverbindung mit mindestens 2 Zerewitinoff-aktiven H-Atomenerfolgt, wobei ein Zwischenprodukt mit einem zahlenmittleren Molekulargewicht von <4500 g/mol erhalten wird und das erhaltene Zwischenprodukt mit einem zyklischen Carbon- oder Kohlensäureester umgesetzt wird, wobei ein funktionalisiertes Polyoxymethylen-Block-Copolymer erhalten wird.

Die erhaltenen funktionalisierten niedermolekularen Polyoxymethylen-Block-Copolymere bieten gegenüber existierenden bi- oder höherfunktionellen Polymeren eine Reihe von Vorteilen.

Durch die Umsetzung des Zwischenproduktes mit zyklischen Carbon- bzw. Kohlensäureestern wird eine Stabilisierung und Funktionalisierung der erfindungsgemäßen Polyoxymethylen-Block-Copolymere erreicht. Hierbei werden durch Ringöffnung unter Ausbildung einer Ester- oder Carbonat-Bindung funktionelle Endgruppen in Form von Hydroxy- oder Carbonsäure-Gruppen eingeführt. Das Vorliegen dieser funktionellen Endgruppen ermöglicht die weitere Umsetzung zu Polyurethanen, polyurethananalogen Polyamiden oder Polyesteramiden, so dass sich hierdurch neue Anwendungsfelder für die erhaltenen, funktionalisierten Polyoxymethylen-Block-Copolymere eröffnen.

Weiterhin werden die zyklischen Carbon- bzw. Kohlensäureester vollständig in das Produkt eingebaut, ohne dass weitere Spaltprodukte freigesetzt werden. Gegenüber bekannten Methoden zur Stabilisierung, wie beispielweise die Umsetzung mit offenkettigen Anhydriden, ergibt sich eine vorteilhafte Atomökonomie, und es entfallen zusätzliche Aufreinigungsschritte zur Entfernung dieser Spaltprodukte, wie beispielweise Essigsäure, wenn die Stabilisierung mit Essigsäureanhydrid durchgeführt wird.

Die erfindungsgemäßen Polyoxymethylen-Block-Copolymere bieten gegenüber Homopolymeren den Vorteil, dass bestimmte physikalische Eigenschaften wie Glasübergangstemperaturen, Schmelzbereiche und Viskositäten über die Länge der Polyoxymethylen-Blöcke im Verhältnis zur Länge der Starterverbindung gezielt angesteuert werden können.

Gegenüber Polyoxymethylen-Homopolymeren gleichen Molekulargewichts ist die Teilkristallinität in den erfindungsgemäßen Polyoxymethylen-Block-Copolymeren typischerweise herabgesetzt, was üblicherweise ebenfalls zu einer Herabsetzung von Glasübergangstemperaturen, Schmelzpunkten und Viskositäten führt. Die Anwesenheit der zusätzlichen aus der Starterverbindung hervorgehenden Oligomer-Blöcke führt weiterhin typischerweise zu einer Erhöhung der chemischen und thermischen Stabilität. Reine Polyoxymethylen-Polymere sind typischerweise auf eine Funktionalität $F \leq 2$ beschränkt. Es gibt kein Verfahren, das es ermöglicht, die Funktionalität zu kontrollieren. Über den Einsatz von Starterverbindungen mit einer Funktionalität $F \geq 2$ ist im Gegensatz dazu der Zugang zu Polyoxymethylen-Blockcopolymeren mit einer Funktionalität $F \geq 2$ möglich.

Die Funktionalität der erfindungsgemäßen Polyoxymethylen-Blockcopolymere wird über terminale oder entlang der Polymerkette angeordnete, Heteroatome enthaltende, deprotonierbare funktionelle Gruppen wie beispielsweise Hydroxygruppen, Thiolgruppen, Aminogruppen, Carbonsäuregruppen oder Carbonsäurederivate wie z.B. Amide hergestellt. Vorzugsweise wird die durchschnittliche Funktionalität der erfindungsgemäßen Polyoxymethylen-Block-Copolymere, also die durchschnittliche Anzahl funktioneller Gruppen pro Molekülkette, über die Funktionalität des eingesetzten Starters eingestellt. Durch Kombination von erfindungsgemäßen Polyoxymethylen-Blockcopolymeren verschiedener Funktionalität F = 2, 3, etc. kann eine durchschnittliche Funktionalität $F \geq 2$ eingestellt werden.

Gegenüber Polyetherpolyolen gleichen Molekulargewichts ist der Anteil an Polyoxyalkylen-Einheiten, die aus den entsprechenden Alkylenoxiden hergestellt werden, um den Polyoxymethylen-Anteil verringert, was zu einer vorteilhaften Energiebilanz des Produktes führt. Physikalische Eigenschaften wie Glasübergangstemperaturen, Schmelzbereiche und Viskositäten können für ein gegebenes Molekulargewicht über die Länge der Polyoxymethylen-Blöcke im Verhältnis zu den Polyether-Blöcken gezielt angesteuert werden.

Polyoxymethylen-Block-Copolymere im Sinne der Erfindung bezeichnen polymere Verbindungen, die mindestens einen Polyoxymethylen-Block sowie mindestens einen zusätzlichen oligomeren Block enthalten und vorzugsweise ein im mittleren vierstelligen Bereich liegendes Molekulargewicht nicht überschreiten.

Ein Polyoxymethylen-Block im Sinne der Erfindung umfasst mindestens eine und vorzugsweise höchstens 150 direkt miteinander verknüpfte Oxymethylen-Einheiten. Ein zusätzlicher oligomerer Block im Sinne der Erfindung unterscheidet sich strukturell von einem Polyoxymethylen-Block und ist aus von Formaldehyd verschiedenen Monomeren aufgebaut, wobei das Vorhandensein von Oxymethylen-Gruppen im zusätzlichen oligomeren Block nicht ausgeschlossen wird. Der Einbau des zusätzlichen oligomeren Blocks kann im Sinne der Erfindung in einfacher Weise durch den Einsatz von oligomeren Starterverbindungen erfolgen. Die oligomere Starterverbindung wird dann als zusätzlicher oligomerer Block in das erfindungsgemäße Polyoxymethylen-Block-Copolymer eingebaut oder ist Bestandteil des zusätzlichen oligomeren Blocks. Die oligomere Starterverbindung kann, gegebenenfalls unmittelbar vor dem erfindungsgemäßen Schritt der Polymerisation von Formaldehyd, aus den Monomeren und ggf. einer Starterverbindung mit geringerem Molekulargewicht aufgebaut werden. Die Eigenschaften des oligomeren Blocks können über die Anzahl und Art der enthaltenen Monomere eingestellt werden.

Als Zwischenprodukt im erfindungsgemäßen Sinne wird das Reaktionsprodukt nach der Umsetzung der Starterverbindung mit Formaldehyd verstanden, welches durch das erfindungsgemäße Verfahren leicht auf ein zahlenmittleres Molekulargewicht von <4500 g/mol eingestellt werden kann.

Funktionalisierte Polyoxymethylen-Block-Copolymere im Sinne der Erfindung bezeichnen Polyoxymethylen-Block-Copolymere im Sinne der Erfindung, deren terminale Gruppen zu mindestens 90 mol-%, bevorzugt 92,5 bis 100 mol-%, besonders bevorzugt 95 bis 100mol-% bezogen auf die Gesamtmenge an terminalen Gruppen von einem oder mehreren verschiedenen zyklischen Carbon- oder Kohlensäureestern abgeleitet sind und entsprechend Carbonsäure- oder Hydroxygruppen als Endgruppen enthalten.

Formaldehyd kann in gasförmigem Zustand, ggf. als Mischung mit Inertgasen wie z.B. Stickstoff oder Argon und/oder mit gasförmigem, überkritischem oder flüssigem Kohlendioxid, oder als Formaldehyd-Lösung eingesetzt werden. Bei Formaldehyd-Lösungen kann es sich um wässrige Formaldehyd-Lösungen mit einem Formaldehyd-Gehalt zwischen 1 Gew.% und 37 Gew.% handeln, die gegebenenfalls bis zu 15 Gew.% Methanol als Stabilisator enthalten können. Alternativ können Lösungen von Formaldehyd in polaren organischen Lösungsmitteln wie z.B. Methanol oder höheren ein- oder mehrwertigen Alkoholen, 1,4-Dioxan, Acetonitril, *N,N*-Dimethylformamid (DMF), *N,N*-Dimethylacetamid, Dimethylsulfoxid (DMSO), zyklische Carbonaten, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, mit Wasser und/oder anderen Lösungsmitteln eingesetzt werden. Die Anwesenheit weiterer Substanzen in Lösung ist ebenfalls mit eingeschlossen. Bevorzugt ist der Einsatz von gasförmigem Formaldehyd. Besonders bevorzugt ist der Einsatz von Gemischen von gasförmigem Formaldehyd mit Argon und/oder Kohlendioxid. Ebenfalls bevorzugt ist der Einsatz von Lösungen von Formaldehyd in aprotischen polaren organischen Lösungsmitteln wie z.B. 1,4-Dioxan, Acetonitril, *N,N*-Dimethylformamid (DMF), *N,N*-Dimethylacetamid, Dimethylsulfoxid (DMSO), zyklische Carbonaten, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, und/oder anderen Lösungsmitteln.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, Polyoxymethylen, Dimethylacetal, 1,3-Dioxolan, 1,3-Dioxan und/oder 1,3-Dioxepan, besonders bevorzugt sind 1,3,5-Trioxan und Paraformaldehyd.

Bei den Starterverbindungen handelt es sich im Sinne der Erfindung um bi- oder höherfunktionelle Verbindungen mit einem zahlenmittleren Molekulargewicht $M_n$ von beispielsweise zwischen 100 und 3 000 g/mol. Die Funktionalität wird über terminale oder entlang der Polymerkette angeordnete Heteroatome enthaltende, deprotonierbare funktionelle Gruppen wie beispielsweise Hydroxygruppen, Thiolgruppen, Aminogruppen, Carbonsäuregruppen oder Carbonsäurederivate wie z.B. Amide hergestellt. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert.Als Lösungsmittel können beispielsweise Wasser, Methanol oder höhere ein- oder mehrwertige Alkohole, unpolare organische Lösungsmittel wie z.B. lineare oder verzweigte Alkane oder AlkanGemische, Toluol, die verschiedenen Xylol-Isomere oder Gemische derselben, Mesitylen, ein oder mehrfach halogenierte Aromaten oder Alkane, offenkettige oder zyklische Ether wie z.B. Tetrahydrofuran (THF) oder Methyl-tert-butylether (MTBE), offenkettige oder zyklische Ester, oder polare aprotische Lösungsmittel wie z.B. 1,4-Dioxan, Acetonitril, *N,N*-Dimethylformamid (DMF), *N,N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, mit Wasser und/oder anderen Lösungsmitteln eingesetzt werden. Auch der Einsatz von flüssigem oder überkritischem Kohlendioxid als Lösungsmittel in Reinsubstanz oder als Gemisch mit einem der oben genannten Lösungsmittel ist möglich. Bevorzugt sind offenkettige oder zyklische Ether wie z.B. Tetrahydrofuran (THF) oder Methyl-*tert*-butylether (MTBE), offenkettige oder zyklische Ester, polare aprotische Lösungsmittel wie z.B. 1,4-Dioxan, Acetonitril, *N,N*-Dimethylformamid (DMF), *N,N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander und/oder anderen Lösungsmitteln sowie flüssiges oder überkritisches Kohlendioxid. Besonders bevorzugt ist die Reaktion in Abwesenheit von Lösungsmitteln.

Die Reaktion kann im Batch-Verfahren, im Semi-Batch-Verfahren oder im kontinuierlichen Verfahren durchgeführt werden. Im bevorzugten Semi-Batch-Verfahren wird ein Gemisch aus Starter, Katalysator und ggf. einem Lösungsmittel vorgelegt und Formaldehyd bzw. die Formaldehyd-Quelle in Reinsubstanz als Gas oder Flüssigkeit oder in Lösung der Reaktion zudosiert. Die zudosierte Menge an Formaldehyd bzw. in der Formaldehyd-Quelle enthaltenen Formaldehyd-Äquivalenten wird so gewählt, dass das gewünschte Molekulargewicht des Zwischenproduktes erreicht wird.

Die Reaktion wird beispielsweise bei einer Temperatur zwischen 20 und 200 °C, bevorzugt zwischen 20 und 120 °C und besonders bevorzugt zwischen 40 und 120 °C durchgeführt. Bei Verwendung einer Formaldehyd-Quelle, die chemisch gebundenen Formaldehyd enthält, liegt die Reaktionstemperatur oberhalb der unter den gegebenen Bedingungen zur Freisetzung von Formaldehyd benötigten Temperatur. Bei Anwesenheit von geeigneten Katalysatoren, die die Freisetzung von Formaldehyd beschleunigen, kann die Reaktionstemperatur unterhalb der für die nicht-katalysierte Freisetzung von Formaldehyd nötigen Temperatur liegen. Gegebenenfalls können die Katalysatoren für die Herstellung der erfindungsgemäßen Polyoxymethylen-Block-Copolymere ebenfalls als Katalysatoren für die Freisetzung von Formaldehyd fungieren.

Der Druck während der Polymerisation von Formaldehyd in Anwesenheit der Starterverbindung und gegebenenfalls zusätzlichen Comonomers beträgt 1 bis 200 bar. Bei der Verwendung von gasförmigem Formaldehyd beträgt der Druck bevorzugt 5 bis 100 bar, besonders bevorzugt 10 bis 50 bar.

Die Reaktionszeit für die Polymerisation beträgt beispielsweise 0,05 bis 120 Stunden, bevorzugt 0,5 bis 48 Stunden, besonders bevorzugt 1 bis 24 Stunden. Als Reaktionszeit wird die Zeitspanne betrachtet, während der sich Katalysator, Formaldehyd und Starterverbindung bei Reaktionstemperatur in direktem Kontakt befinden. Insbesondere bei der Durchführung im Semi-Batch-Verfahren, wie z.B. beim Einleiten von gasförmigem Formaldehyd in die Reaktionsmischung, richtet sich die Reaktionszeit nach der Menge des zudosierten Formaldehyds bzw. der zudosierten Formaldehyd-Äquivalente.

Durch die Polymerisation von Formaldehyd in Gegenwart eines Katalysators und einer Starterverbindung im Sinne der Erfindung wird ein Zwischenprodukt erhalten, welches mindestens einen Polyoxymethylen-Block sowie mindestens einen zusätzlichen oligomeren Block enthält (Polyoxymethylen-Block-Copolymer im Sinne der Erfindung). Das erhaltene Zwischenprodukt (Polyoxymethylen-Block-Copolymer) weist ein zahlenmittleres Molekulargewicht $M_n$ von <4500 g/mol auf

Zyklische Carbon- oder Kohlensäureester im Sinne der Erfindung sind zyklische Verbindungen, die mindestens eine Ester- oder Carbonatgruppe als Teil des Ringsystems enthalten, wie beispielsweise aliphatische oder aromatische Lactone, Lactide, zyklische Carbonate, sowie aliphatische oder aromatische zyklische Anhydride.

Im Anschluss an die Zudosierung der gewünschten Menge an Formaldehyd bzw. Formaldehydäquivalenten und gegebenenfalls zusätzlicher Comonomere erfolgt die Umsetzung der erhaltenen Oxymethylen-Block-Copolymer-Zwischenstufe mit einem zyklischen Carbon- oder Kohlensäureester bzw. einem Gemisch an verschiedenen zyklischen Carbon- oder Kohlensäureestern.

Die Stoffmenge der zyklischen Carbon- oder Kohlensäureester richtet sich nach der molaren Menge der im zusätzlichen Oligomer enthaltenen funktionellen Gruppen. So beträgt die benötigte Mindestmenge

$$n_{Ester,\,min} = (m_{Starter} / M.W._{Starter}) \times F_{Starter} \qquad \text{(Gleichung 1)},$$

wobei $m_{Starter}$ die Masse der eingesetzten Starterverbindung, $M.W._{Starter}$ deren zahlenmittleres Molekulargewicht und $F_{Starter}$ deren durchschnittliche Funktionalität, also die durchschnittliche Anzahl an funktionellen Gruppen pro Startermolekül, bezeichnet.

Beim Einsatz von zyklischen Anhydriden beträgt die molare Menge das ein- bis dreifache, bevorzugt das einfache bis doppelte, besonders bevorzugt das ein- bis 1,5-fache von $n_{Ester,\,min}$. Bei der Reaktion mit dem Kettenende der Polyoxymethylen-Block-Copolymer-Zwischenstufe wird unter Ringöffnung eine Esterbindung gebildet, wobei gleichzeitig eine terminale Carbonsäure entsteht. Pro Kettenende wird somit maximal ein zyklisches Anhydrid eingebaut.

Beim Einsatz von Lactonen, Lactiden und zyklischen Carbonaten beträgt die bevorzugte molare Menge das ein- bis 50-fache, bevorzugt das 2- bis 20-fache, besonders bevorzugt das 5- bis 10-fache von $n_{Ester,min}$. Bei der Reaktion mit dem Kettenende der Polyoxymethylen-Block-Copolymer-Zwischenstufe wird unter Ringöffnung im Fall der Lactone oder Lactide eine Ester-Bindung, im Fall der zyklischen Carbonate eine Carbonat-Bindung gebildet. In beiden Fällen liegt nach dem Einbau eine terminale Hydroxygruppe vor. Diese kann mit einem weiteren Lacton, Lactid, zyklischen Carbonat oder, bei Anwesenheit desselben, mit einem zyklischen Anhydrid reagieren, so dass als Kettenenden auch Homo- oder Copolymerblöcke von Lactonen, Lactiden und/oder zyklischen Carbonaten, gegebenenfalls terminiert von einer aus einem zyklischen Anhydrid stammenden Säuregruppe, vorliegen können.

Die Zudosierung der zyklischen Carbon- oder Kohlensäureester kann in Reinsubstanz oder gelöst in einem der für die Polymerisation von Formaldehyd in Anwesenheit der Starterverbindung und gegebenenfalls zusätzlichen Comonomers geeigneten Lösungsmittel erfolgen. Bevorzugt ist die Zudosierung der zyklischen Carbon- oder Kohlensäureester in Reinsubstanz oder gelöst in einem Lösungsmittel, welches mit dem in der Polymerisation von Formaldehyd in Anwesenheit des zusätzlichen Oligomers und gegebenenfalls zusätzlichen Comonomers verwendeten Lösungsmittel identisch ist.

Die Zudosierung der zyklischen Carbon- oder Kohlensäureester kann bei Temperaturen zwischen 20 und 200 °C, vorzugsweise zwischen 20 und 120°C, erfolgen. Dabei kann die gesamte Menge an zyklischen Carbon- bzw. Kohlensäureestern pulsartig in einem oder mehreren Pulsen oder kontinuierlich über einen längeren Zeitraum zudosiert werden.

Die Zudosierung der zyklischen Carbon- oder Kohlensäureester erfolgt unter Atmosphärendruck oder erhöhtem Druck, beispielsweise dem während der Polymerisation von Formaldehyd in Anwesenheit der Starterverbindung und gegebenenfalls zusätzlichen Comonomers verwendeten Druck.

Nach Beendigung des Dosiervorgangs wird das Reaktionsgemisch vor oder nach Ablassen des gegebenenfalls vorhandenen Drucks bei Temperaturen zwischen 20 und 200 °C, bevorzugt 20 bis 150 °C, besonders bevorzugt 80 bis 120 °C über einen Zeitraum von 0,1 bis 24 Stunden, vorzugsweise 1 bis 16 Stunden, nachgerührt.

Im Anschluss an die Reaktion der Polyoxymethylen-Block-Copolymere mit den zyklischen Carbon- oder Kohlensäureestern kann vor oder nach Ablassen des gegebenenfalls vorhandenen Drucks eine Deaktivierung der im Reaktionsgemisch vorhandenen überschüssigen unreagierten zyklischen Carbon- oder Kohlensäureester sowie gegebenenfalls des Katalysators, beispielsweise durch Wasser, wässrige Basen wie z.B. Alkali- oder Erdalkalihydroxid-, Alkalicarbonat- oder Alkalihydrogencarbonat-, Alkalialkoxid-, Alkalicarboxylat-, wässrige Ammoniaklösung, wässrige Pufferlösungen, welche Gemische aus Carbonat- und/oder Phosphat-Salzen in Kombination mit einem oder mehreren Hydrogencarbonat-, Phosphat-, Hydrogenphosphat- und/oder Dihydrogenphosphat-Salzen enthalten, Alkoholen, Aminen oder Mischungen von zwei oder mehr der vorgenannten Komponenten erfolgen.

Bei Vorliegen von Carbonsäure-terminierten Polyoxymethylen-Block-Copolymere kann vor der Isolierung eine weitere Umsetzung mit äquimolaren Mengen oder einem Überschuss an Epoxiden, bezogen auf die Anzahl der vorhandenen Carbonsäuregruppen, erfolgen, so dass Hydroxyterminierte niedermolekulare Polyoxymethylen-Block-Copolymere gewonnen werden. Die Umsetzung mit den Epoxiden erfolgt bevorzugt vor der gegebenenfalls durchzuführenden Deaktivierung der gegebenenfalls ebenfalls im Reaktionsgemisch vorhandenen überschüssigen, unreagierten zyklischen Carbon- oder Kohlensäureester.

Zur Isolierung der erfindungsgemäßen funktionalisierten niedermolekularen Polyoxymethylen-Block-Copolymere kann nach Ablassen des gegebenenfalls vorhandenen Drucks eine Entfernung der flüchtigen Komponenten, wie z.B. Lösungsmittel, unreagierte Monomere und/oder zyklische Carbonsäure- oder Kohlensäureester bzw. deren Hydrolyse- oder Aminolyseprodukte, z.B. durch Vakuumdestillation oder Dünnschichtverdampfung, erfolgen. Zusätzliche Reinigungsschritte wie z.B. Extraktion, Fällung und/oder Filtration, z.B. zum Entfernen des Katalysators, unreagierter Monomere und/oder zyklischer Carbonsäure- oder Kohlensäureester bzw. deren Hydrolyse- oder Aminolyseprodukte und/oder gegebenenfalls im Reaktionsgemisch vorhandener Salze, sind ebenfalls eingeschlossen.

Die nach dem erfindungsgemäßen Verfahren erhältlichen funktionalisierten niedermolekularen Polyoxymethylen-Block-Copolymere weisen einen geringen Gehalt an Nebenprodukten auf und können problemlos verarbeitet werden.

Ausführungsformen des erfindungsgemäßen Verfahrens werden nachfolgend beschrieben. Sie können beliebig miteinander kombiniert werden, sofern sich aus dem Kontext nicht eindeutig das Gegenteil ergibt.

Das erhaltene Zwischenprodukt (Polyoxymethylen-Block-Copolymer) weist ein zahlenmittleres Molekulargewicht von <4500 g/mol, bevorzugt ≤ 3500 g/mol, und besonders bevorzugt ≤ 3000 g/mol auf. Das Molekulargewicht kann mittels Gelpermeationschromatographie gegen Polypropylenglykol-Standards oder über die OH-Zahl bestimmt werden. Vorzugsweise beträgt das Molekulargewicht des Zwischenproduktes ≥ 92 g/mol bis < 4500 g/mol, besonders bevorzugt ≥ 500 g/mol bis < 4500 g/mol, mehr bevorzugt ≥ 600 g/mol bis ≤ 3500 g/mol und ganz besonders bevorzugt ≥ 600 g/mol bis ≤ 3000 g/mol.

Die Einstellung des mittleren Molekulargewichts des Zwischenproduktes (Polyoxymethylen-Block-Copolymer) auf einen Wert < 4500 g/mol erfolgt über die Stöchiometrie der Einsatzstoffe. So wird die Summe der molare Mengen $n_i$ aller in das erfindungsgemäße Polyoxymethylen-Block-Copolymer eingeführten Monomere i, also der Summe der molaren Menge $n_{FA}$ von Formaldehyd bzw. von den in der Formaldehyd-Quelle enthaltenen Formaldehyd-Äquivalenten und der molaren Mengen der zusätzlichen Comonomere, sowie die Summe der molaren Mengen $n_j$ aller in das erfindungsgemäße Polyoxymethylen-Block-Copolymer eingeführten Endgruppen j (zyklische Carbon- oder Kohlensäureester) so gewählt, dass

$$M_{Starter} + \frac{\sum_i n_i \times M_i + \sum_j n_j \times M_j}{n_{Starter}} < 4500\,\text{g/mol} \qquad \text{(Gleichung 2)}$$

beträgt, wobei $n_{Starter}$ der molaren Menge und $M_{Starter}$ dem zahlenmittleren Molekulargewicht der Starterverbindung

entspricht, sowie $M_i$ dem Molekulargewicht des jeweiligen Monomers i und $M_j$ dem Molekulargewicht der jeweiligen Endgruppe j.

In einer weiteren Ausführungsform des erfindungsgemäßen Verfahrens ist der Katalysator ausgewählt aus der Gruppe der basischen Katalysatoren und/oder der Lewis-sauren Katalysatoren. Als Katalysator werden Verbindungen eingesetzt, die die Polymerisation von Formaldehyd katalysieren. Hierbei kann es sich um basische Katalysatoren handeln oder um Lewis-saure Katalysatoren, die als Lewis-saures Zentrum z.B. ein Metall der dritten, vierten oder fünften Hauptgruppe, insbesondere Bor, Aluminium, Zinn oder Bismut, ein Metall der dritten oder vierten Nebengruppe oder der Reihe der Lanthanoide, Vanadium, Molybdän, Wolfram oder ein Metall der achten bis zehnten Nebengruppe enthalten. Bevorzugt sind Lewis-saure Katalysatoren.

Beispiele für basische Katalysatoren sind tertiäre oder aromatische basische Amine wie z.B. Triethylamin sowie andere Trialkylamine, Pyridin sowie ein- oder mehrfach substituierte PyridinDerivate, *N*-Alkyl- oder *N*-Aryl-imidazol, 1,4-Diazabicyclo[2.2.2]octan (DABCO), 4-(Dimethylamino)-pyridin (DMAP), 1,8-Diazabicyclo[5.4.0]undec-7-en (DBU), Triazabicyclo[4.4.0]dec-5-ene (TBD) und 7-Methyl-1,5,7-triazabycyclo[4.4.0]dec-5-en (MTBD). Weitere Beispiele für basische Katalysatoren sind anorganische basische Verbindungen wie beispielsweise Alkalihydroxide, insbesondere Kaliumhydroxid und Cäsiumhydroxid. Der Zusatz von weiteren Additiven zur Erhöhung der Löslichkeit und/oder der Reaktivität, wie beispielsweise Kronenether oder Tetraalkylammonium-, Tetraalkyl- oder Tetraarylphosphonium-Salzen ist nicht ausgeschlossen.

Lewis-saure Katalysatoren enthalten als Lewis-saures Zentrum ein oder mehrere koordinativ ungesättigte Metallatome, wie z.B. Metalle der dritten, vierten oder fünften Hauptgruppe, insbesondere Bor, Aluminium, Zinn oder Bismut, Metalle der dritten und vierten Nebengruppe sowie Metalle der Reihe der Lanthanoide, Vanadium, Molybdän, Wolfram, Metalle der achten bis zehnten Nebengruppe, insbesondere Eisen, Kobalt, Nickel, Rhodium, Iridium, Palladium, Platin, Kupfer oder Zink. Das koordinativ ungesättigte Lewis-saure Zentrum zeichnet sich dadurch aus, dass nukleophile Moleküle daran binden können. Das koordinativ ungesättigte Lewis-saure Zentrum kann bereits in der als Katalysator eingesetzten Verbindung vorhanden sein oder bildet sich in der Reaktionsmischung, z.B. durch Abspaltung eines schwach gebundenen nukleophilen Moleküls. Besonders bevorzugt sind Lewis-saure Katalysatoren, die als Lewis-saures Zentrum ein oder mehrere Zinn-, Bismuth-, Vanadium- oder Molybdän-Atome enthalten, wie z.B. Dibutylzinndilaurat (DBTL), Dibutylzinnoxid, Bismuth-tri(2-ethylhexanoat), Lithiumorthovanadat oder Lithiummolybdat.

Der Katalysator wird üblicherweise im molaren Verhältnis 1:10000 bis 10:1, bevorzugt 1:1 000 bis 1:1, besonders bevorzugt 1:1000 bis 1:10 zu den in der Starterverbindung enthaltenen funktionellen Gruppen eingesetzt.

In einer weiteren Ausführungsform des erfindungsgemäßen Verfahrens wird die Umsetzung des Zwischenprodukts mit dem zyklischen Carbon- oder Kohlensäureester in Gegenwart eines Katalysators durchgeführt, welcher der gleiche Katalysator wie in der vorangegangenen Polymerisation von Formaldehyd ist.

In einer weiteren Ausführungsform des erfindungsgemäßen Verfahrens weist das Startermolekül ein zahlenmittleres Molekulargewicht $M_n$ von $\geq$ 62 g/mol bis $\leq$ 4470 g/mol, bevorzugt von $\geq$ 90 g/mol bis $\leq$ 3470 g/mol und besonders bevorzugt von $\geq$ 100 g/mol bis $\leq$ 3000 g/mol auf.

Die Starterverbindungen haben typischerweise eine Funktionalität $\geq$2, beispielsweise in einem Bereich von $\geq$ 2 bis $\leq$ 6, vorzugsweise von $\geq$ 2,0 bis $\leq$ 4 und besonders bevorzugt von $\geq$ 2,0 bis $\leq$ 3.

In einer weiteren Ausführungsform des erfindungsgemäßen Verfahrens ist das Startermolekül ausgewählt aus der Gruppe der Polyetherpolyole, Polyesterpolyole, Polyetheresterpolyole, Polycarbonatpolyole und/oder Polyacrylatpolyole. Die Polyole können beispielsweise ein zahlenmittleres Molekulargewicht $M_n$ von $\geq$ 62 g/mol bis $\leq$ 8000 g/mol, bevorzugt von $\geq$ 90 g/mol bis $\leq$ 5000 g/mol und besonders bevorzugt von $\geq$ 92 g/mol bis $\leq$ 2000 g/mol aufweisen.

Die durchschnittliche OH-Funktionalität der Polyole ist $\geq$ 2, beispielsweise in einem Bereich von $\geq$ 2 bis $\leq$ 6, vorzugsweise von $\geq$ 2,0 bis $\leq$ 4 und mehr bevorzugt von $\geq$ 2,0 bis $\leq$ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethyl-1,3-pentandiol, Dipropylenglykol, Polypropylenglykole, Dibutylenglykol, Polybutylenglykole, Bisphenol A und lactonmodifizierte Diole der vorstehend genannten Art.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle für diese Polyetherpolyole sind zum Beispiel Diole mit zahlenmittleren Molekulargewichten $M_n$ von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1, 5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

In einer weiteren Ausführungsform des erfindungsgemäßen Verfahrens ist der zyklische Carbon- oder Kohlensäureester ausgewählt aus der Gruppe der aliphatischen oder aromatischen Lactone, Lactide, zyklischen Carbonate und/oder zyklischen Anhydride.

Aliphatische oder aromatische Lactone im Sinne der Erfindung sind zyklische Verbindungen enthaltend eine Esterbindung im Ring, vorzugsweise Verbindungen der Formeln (I), (II) oder (III),

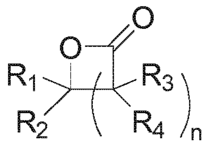

(I)

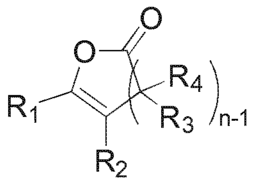

(II)

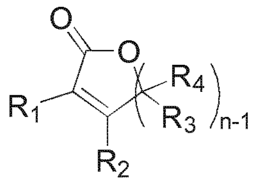

(III)

wobei

R1, R2, R3 und R4 unabhängig voneinander für Wasserstoff, einen linearen oder verzweigen, gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls einfach oder mehrfach substituierten, gegebenenfalls Heteroatome enthaltenden C6 bis C18 Arylrest stehen oder Glieder eines gesättigten oder ungesättigten, gegebenenfalls Heteroatome enthaltenen 4 bis 7 gliedrigen Rings oder polyzyklischen Systems sein können,

wobei die Verbindungen der Formel I auch durch Chlor, Brom, Nitrogruppen oder Alkoxygruppen substituiert sein können,

n eine ganze Zahl größer gleich 1, bevorzugt 1, 2, 3 oder 4 ist,

und R3 und R4 in Wiederholungseinheiten (n > 1) jeweils unterschiedlich sein können.

Bevorzugte Verbindungen der Formeln (I), (II) oder (III) sind
4-gliedrige Ringlactone wie β-Propiolacton, β-Butyrolacton, β-Isovalerolacton, β-Caprolacton, β-Isocaprolacton, β-Methyl-β-valerolacton,
5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on,
6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano [4,3 -b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isocliromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on,
7-gliedrige Ringlactone, wie ε-Caprolacton, p-Dioxanon und 1,5-Dioxepan-2-on, 5-Methyloxepan-2-on, Oxepane-2,7-dion, thiepan-2-on, 5-Chlorooxepan-2-on, (4S)-4-(Propan-2-yl)oxepan-2-on, 7-Butyloxepan-2-on, 5-(4-Aminobutyl)oxepan-2-on, 5-Phenyloxepan-2-on, 7-Hexyloxepan-2-on, (5S,7S)-5-Methyl-7-(propan-2-yl)oxepan-2-on, 4-Methyl-7-(propan-2-yl)oxepan-2-on,
höhergliedrige Ringlactone, wie (*7E*)-Oxacycloheptadec-7-en-2-on.
Besonders bevorzugt ist ε-Caprolacton und Dihydrocumarin.

Lactide in Sinne der Erfindung sind cyclische Verbindungen enthaltend zwei oder mehr Esterbindungen im Ring, vorzugsweise Verbindungen der Formel (IV),

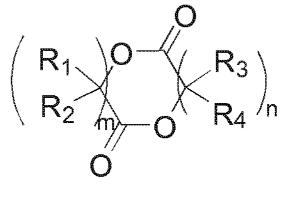

(IV)

wobei R1, R2, R3 und R4 die oben genannte Bedeutung haben,

und m und n unabhängig voneinander eine ganze Zahl größer gleich 1, bevorzugt 1, 2, 3 oder 4 ist,

und R1 und R2 in Wiederholungseinheiten (m > 1) und R3 und R4 in Wiederholungseinheiten (n > 1) jeweils unterschiedlich sein können.

Bevorzugte Verbindungen der Formeln (IV) sind
Glycolid (1,4-Dioxan-2,5-dion), L-Lactid (L-3,6-Dimethyl-1,4-dioxan-2,5-dion), D-Lactid, DL-Lactid, Mesolactid und 3-Methyl-l,4-dioxan-2,5-dion, 3-Methyl-6-(prop-2-en-1-yl)-1,4-dioxane-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen).

Besonders bevorzugt ist L-Lactid.

Als zyklische Carbonate werden vorzugsweise Verbindungen der Formel (V) eingesetzt,

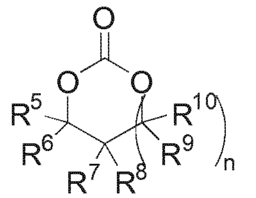

(V)

wobei
R5, R6, R7, R8, R9 und R10 unabhängig voneinander für Wasserstoff, einen linearen oder verzweigen, gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls Heteroatome enthaltenden, gegebenenfalls ein oder mehrfach substituierten C6 bis C18 Arylrest stehen oder Glieder eines gesättigten oder ungesättigten, gegebenenfalls Heteroatome enthaltenden 4 bis 7 gliedrigen Rings oder polyzyklischen Systems sein können,
n eine ganze Zahl größer gleich 0, bevorzugt 0, 1, 2 oder 3 ist,
und R9 und R10 in Wiederholungseinheiten (n > 1) jeweils unterschiedlich sein können,
wobei die Verbindungen der Formel (V) auch durch Chlor, Brom, Nitrogruppen oder Alkoxygruppen substituiert sein können.

Bevorzugte Verbindungen der Formel (V) sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat, Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3 -butandiolcarbonat, 1,3 -Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on, 5,5-Dipropyl-1,3-dioxan-2-on.

Besonders bevorzugt sind Ethylencarbonat, Propylencarbonat, Trimethylencarbonat und Neopentylglykolcarbonat.

Als zyklische Anhydride werden vorzugsweise Verbindungen der Formel (VI), (VII) oder (VIII) eingesetzt,

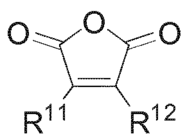

(VI)

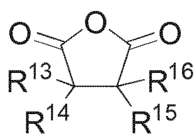

(VII)

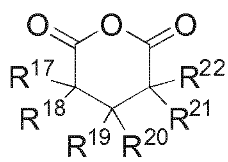

(VIII)

wobei

R11 und R12 für Wasserstoff, Halogen, lineare oder verzweigte, gegebenenfalls Heteroatome enthaltende C1 -C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder R11 und R12 Glieder eines gesättigten oder ungesättigten, gegebenenfalls Heteroatome enthaltenden 4 bis 7 gliedrigen Rings oder polyzyklischen Systems sein können, vorzugsweise R11 und R12 gemeinsam einen gegebenenfalls mit zusätzlichen Substituenten versehenen Benzolring ergeben,

R13, R14, R15 und R16 für Wasserstoff, lineare oder verzweigte, gegebenenfalls Heteroatome enthaltende C1-C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder Glieder eines gesättigten oder ungesättigten, gegebenenfalls Heteroatome enthaltenden 4 bis 7 gliedrigen Rings oder polyzyklischen Systems sein können und

R17, R18, R19, R20, R21 und R22 für Wasserstoff, lineare oder verzweigte, gegebenenfalls Heteroatome enthaltende C1-C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder Glieder eines gesättigten oder ungesättigten, gegebenenfalls Heteroatome enthaltenden 4 bis 7 gliedrigen Rings oder polyzyklischen Systems sein können,

wobei die Verbindungen der Formel (VI) und (VII) und (VIII) auch durch Chlor, Brom, Nitrogruppen oder Alkoxygruppen substituiert sein können.

Bevorzugte Verbindungen der Formel (VI), (VII) oder (VIII) sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, und Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid, 3[(2E)-But-2-en-1-yl]dihydrofuran-2,5-dion. Besonders bevorzugt sind Succinsäureanhydrid, Maleinsäureanhydrid, Glutarsäureanhydrid und Phthalsäureanhydrid.

In einer speziellen Ausführungsform sind die zyklischen Carbon- oder Kohlensäureester mit den unten genannten weiteren Co-Monomeren zumindest teilweise identisch.

In einer weiteren Ausführungsform des erfindungsgemäßen Verfahrens wird das Formaldehyd als gasförmiges Formaldehyd in das Reaktionsgefäß eingetragen.

Im erfindungsgemäßen Verfahren werden die Polyoxymethylen-Einheiten entweder direkt oder indirekt über ein oder mehrere weitere Co-Monomere oder Spacer mit der Starterverbindung verknüpft. Auch eine Verknüpfung mehrerer Polyoxymethylen-Einheiten untereinander über ein oder mehrere weitere Co-Monomere ist möglich. Daher erfolgt in einer weiteren Ausführungsform des erfindungsgemäßen Verfahrens die Polymerisation weiterhin in Gegenwart eines weiteren Co-Monomers. Als weitere Co-Monomere können beispielsweise zyklische Ether, insbesondere Epoxide wie z.B. Ethylenoxid, Propylenoxid oder Styroloxid, Oxetan, THF, Dioxan, zyklische Acetale wie z.B. 1,3-Dioxolan oder 1,3-Dioxepan, zyklische Ester wie z.B. $\gamma$-Butyrolacton, $\gamma$-Valerolacton, $\varepsilon$-Caprolacton, oder zyklische Säureanhydride wie z.B. Maleinsäureanhydrid, Glutarsäureanhydrid oder Phthalsäureanhydrid zum Einsatz kommen. Bevorzugte weitere Co-Monomere sind Epoxide, zyklische Acetale und zyklische Ester, besonders bevorzugte weitere Co-Monomere sind Ethylenoxid, Propylenoxid, 1,3-Dioxolan, 1,3-Dioxepan und $\varepsilon$-Caprolacton.

Die Dosierung weiterer Co-Monomere kann in Reinsubstanz oder in Lösung erfolgen. In einer alternativen Ausführungsform erfolgt die Dosierung weiterer Co-Monomere im Gemisch mit Formaldehyd bzw. der Formaldehyd-Quelle. Die Dosierung weiterer Co-Monomere kann vor der Dosierung, parallel zu der Dosierung oder im Anschluss an die Dosierung von Formaldehyd bzw. der Formaldehyd-Quelle erfolgen.

Ein weiterer Gegenstand der vorliegenden Erfindung sind funktionalisierte Polyoxymethylen-Block-Copolymere, erhältlich durch ein erfindungsgemäßes Verfahren.

In einer Ausführungsform weisen die funktionalisierten Polyoxymethylen-Block-Copolymere ein zahlenmittleres Molekulargewicht von $\leq$ 12 000 g/mol, bevorzugt $\leq$ 7 500 g/mol, besonders bevorzugt $\leq$ 5 000 g/mol auf. Das zahlenmittlere Molekulargewicht kann beispielsweise per GPC gegen Polypropylenglykol-Standards, oder, abhängig von der Art der Endgruppe, über die OH-Zahl oder Säurezahl bestimmt werden.

In einer weiteren Ausführungsform weisen die funktionalisierten Polyoxymethylen-Block-Copolymere eine Viskosität bei 20 °C von $\leq$ 100 000 mPa·s, bevorzugt von $\leq$ 50 000 mPa·s, besonders bevorzugt von $\leq$ 15 000 mPa·s auf.

Die erfindungsgemäßen Carbonsäure-funktionalisierten niedermolekularen Polyoxymethylen-Block-Copolymere können unter Einsatz eines geeigneten Katalysators wie z.B. Magnesiumtetrafluoroborat oder Magnesiumper-

chlorat mit Diisocyanaten unter $CO_2$-Abspaltung zu polyurethananalogen Polyamiden umgesetzt werden. Weiterhin können die erfindungsgemäßen Carbonsäure-funktionalisierten Polyoxymethylen-Block-Copolymere mit Bis- oder Polyoxazolinen zu hochmolekularen Esteramiden umgesetzt werden. Durch Umsetzung mit äquimolaren Mengen oder einem Überschuss (bezogen auf die Säurefunktionalität) an Epoxiden können Hydroxyterminierte Polyoxymethylen-Block-Copolymere erhalten werden.

Die erfindungsgemäßen Hydroxy-funktionalisierten niedermolekularen Polyoxymethylen-Block-Copolymere können direkt in der Reaktion mit Di- oder Polyisocyanaten zu Polyurethanen oder Isocyanat-funktionalisierten Polyurethan-Präpolymeren umgesetzt werden.

Für Polyurethan-, Polyamid- und Polyesteramid-Anwendungen werden vorzugsweise Polyoxymethylen-Block-Copolymere mit einer Funktionalität von mindestens 2 eingesetzt. Für die Herstellung von thermoplastischen Polyurethanen werden vorzugsweise Polyoxymethylen-Block-Copolymere mit einer Funktionalität von genau 2 eingesetzt.

Des Weiteren können die nach dem erfindungsgemäßen Verfahren erhältlichen Polyoxymethylen-Block-Copolymere in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyoxymethylen-Block-Copolymere gewisse Stoffeigenschaften wie beispielsweise Molekulargewicht, Viskosität, Funktionalität und/oder Hydroxyl- bzw. Säurezahl erfüllen müssen.

Daher ist ein weiterer Gegenstand der Erfindung die Verwendung von erfindungsgemäß funktionalisierten Polyoxymethylen-Block-Copolymeren zur Herstellung von Polyamiden, Polyurethanen, Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen.

## Beispiele

Die Erfindung wird anhand der nachfolgenden Figuren und Beispiele näher erläutert, ohne jedoch darauf beschränkt zu sein. Es zeigen:

FIG. 1 eine Reaktoranordnung zur Durchführung des erfindungsgemäßen Verfahrens

Eingesetzte H-funktionelle oligomere Verbindungen:

PET-1: bifunktionelles Poly(oxyethylen)polyol mit dem nominalen Molekulargewicht M.W. = 600 g/mol und der durchschnittlichen Summenformel $HO(CH_2CH_2O)_{13,23}H$. Gemessen wurde eine OH-Zahl von 187,15 $mg_{KOH}/g$, ein zahlenmittleres Molekulargewicht $M_n$ = 658 g/mol und ein Polydispersitätsindex PDI = 1,087 (gemessen per GPC in Chloroform gegen Polypropylenglykol-Standards).

Eingesetzte Isocyanate:

Isocyanat 1 mit einer durchschnittlichen Funktionalität von 2,6 und einem NCO Wert von 31,1-31,1 % enthaltend 42,4% 4,4'-MDI, 12,6% 2,4'-MDI, 2,2% 2,2'-MDI (Desmodur VP PU 0325 der Firma Bayer).

Als Formaldehyd-Quelle wurde Trioxan (CAS [110-88-3]) der Firma Aldrich (Katalognummer T81108) eingesetzt.

Beschreibung der Methoden:

Die Molmassenverteilungen wurden mittels Gel-Permeations-Chromatographie (GPC) ermittelt.

Gel-Permeations-Chromatographie (GPC): Die Messungen erfolgten auf dem Gerät Agilent 1200 Series (G1310A Iso Pump, G1329A ALS, G1316A TCC, G1362A RID, G1365D MWD) der Firma Agilent, Detektion über RID; Elutionsmittel: Chloroform (GPC grade), Flussrate 1,0 ml/min; Säulenkombination: PSS SDV Vorsäule 8×50 mm (5 μm), 2x PSS SDV linear S 8×300 ml (5 μm). Polypropylenglykolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte gemäß DIN 55672-1, wobei anstatt THF als Eluent Chloroform eingesetzt wurde.

$^1H$-NMR-Spektroskopie: Die Messungen erfolgten auf dem Gerät Bruker AV400 (400 MHz) der Firma Bruker; die Kalibrierung der chemischen Verschiebungen erfolgte relativ zum Lösungsmittelsignal ($CDCl_3$, $\delta$ = 7,26 ppm); s = Singulett, m = Multiplett, bs = verbreitertes Singulett, kb = komplexer Bereich. Die Angabe der Integrale erfolgte relativ zueinander.

$^{13}$C-NMR-Spektroskopie: Die Messungen erfolgten auf dem Gerät Bruker AV400 (100 MHz) der Firma Bruker; die Kalibrierung der chemischen Verschiebungen erfolgte relativ zum Lösungsmittelsignal ($CDCl_3$, $\delta$= 77,16 ppm); APT (attached proton test): $CH_2$, $C_{quart}$: positives Signal (+); CH, CH3: negatives Signal (-); HMBC: Hetero multiple bond correlation; HSQC: Heteronuclear single-quantum correlation.

Infrarot (IR)-Spektroskopie: Die Messungen erfolgten auf dem Gerät Bruker Alpha-P FT-IR-Spektrometer der Firma Bruker; die Messungen erfolgten in Reinsubstanz; Signalintensitäten: vs = very strong, s = strong, m = medium, w = weak, vw = very weak; b = verbreiterte Bande.

Electrospray-Massenspektrometrie (ESI-MS): Die Messungen erfolgten auf dem Gerät LTQ Orbitrap XL der Firma Thermo Fisher Scientific; Proben wurden mit MeOH verdünnt.

Die OH-Zahl (Hydroxylzahl) wurde in Anlehnung an DIN 53240-2 bestimmt, wobei jedoch *N*-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "$mg_{KOH}/g$" bezieht sich auf mg[KOH]/g[Produkt]. Die OH-Zahl steht gemäß nachfolgender Gleichung in Beziehung zur Äquivalentmolmasse.

$$\text{OH-Zahl } [mg_{KOH}/g] = 56100\ [mg_{KOH}/mol] \,/\, \text{Äquivalentmolmasse } [g/mol]$$

Unter Äquivalentmolmasse ist die durch die Zahl der aktiven Wasserstoffatome (Funktionalität) geteilte zahlenmittlere Gesamtmolmasse des aktive Wasserstoffatome enthaltenden Materials zu verstehen.

Die Säurezahl wurde in Anlehnung an (DIN EN ISO 2114) bestimmt, wobei jedoch mit einer 0.5 molaren methanolische Kaliumhydroxid-Lösung anstelle einer ethanolischen Kaliumhydroxid-Lösung titriert wurde. Die Endpunktserkennung erfolgte mittels Potentiometrie. Die Angabe der Einheit in "$mg_{KOH}/g$" bezieht sich auf $mg[_{KOH}]$/g[Polysäure].

Die Bestimmung der Viskosität erfolgte auf einem Physica MCR 501 Rheometer der Fa. Anton Paar. Es wurde eine Kegel-Platte-Konfiguration mit einem Abstand von 50 $\mu$m gewählt (Messsystem DCP25). 0,1 g der Substanz wurde auf der Rheometerplatte aufgebracht und bei 25°C einer Scherung von 0,01 bis 1000 1/s unterworfen und für 10 min alle 10 s die Viskosität gemessen. Angegeben ist die über alle Messpunkte gemittelte Viskosität oder bei nicht-konstantem Viskositätsverhalten die gemessenen Maximal- und Minimalwerte.

Die Bestimmung der Glasübergangstemperaturen ($T_g$) erfolgte per DSC (Differential Scanning Calorimetry) auf dem Gerät DSC 1 STAR$^e$ der Firma Mettler Toledo. Die Probe wurde bei einer Heizrate von 10 K/min über zwei Heizzyklen von -80°C bis +250°C vermessen. Die Glasübergangstemperatur wurde in der zweiten Aufheizrate ermittelt.

Für die Reaktionen wurde eine Versuchsapparatur verwendet, die aus zwei 200 ml Edelstahlautoklaven bestand, welche über eine beheizbare und mit einem Ventil absperrbare 1/8-Zoll-Gaskapillare ("Brücke") verbunden waren. Beide Reaktoren waren mit Hohlwellenrührer und Manometer ausgestattet und unabhängig voneinander beheizbar. Die Gaszufuhr zu Reaktor 1 ("Depolymerisationsreaktor" R1) erfolgte über ein mit einem Massenflußregler (MFC 1, Kapazität: 100 ml/min) verbundenes Tauchrohr. Der Gasstrom wurde durch die Brücke von Reaktor 1 in den Reaktor 2 geleitet. An Reaktor 2 ("Polymerisationsreaktor" R2) war ein Gasauslass, wobei der Abgasstrom mit Hilfe eines zweiten Massenflussreglers (MFC 2, Kapazität: 100 ml/min) gesteuert wurde. Über MFC 1 wurde ein Trägergasstrom (Argon oder Kohlendioxid) mit dem Volumenstrom $\dot{V}_{in}$ durch den Reaktor 1 geleitet, in dem die Depolymerisation von Paraformaldehyd zu gasförmigem Formaldehyd durchgeführt wurde. Der mit Formaldehydgas angereicherte Trägergasstrom wurde dann durch die beheizte Brücke in Reaktor 2 geleitet, in dem die Polymerisation durchgeführt wurde. Die Druckkonstanz im Gesamtsystem wurde durch Regelung von MFC 2 als Slave mit dem an Reaktor 2 angebrachten Druckaufnehmer sichergestellt.

Die in den Beispielen eingesetzten Druckreaktoren hatte eine Höhe (innen) von 6,84 cm und einen Innendurchmesser von 5,98 cm. Die Reaktoren waren ausgestattet mit einem elektrischen Heizmantel (240 Watt maximale Heizleistung). Weiterhin waren die Reaktoren mit einem Einleitrohr sowie je einem Thermofühler mit 1,6 mm Durchmesser ausgestattet, der bis 3 mm über den Boden in den Reaktor ragte.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 25 mm und eine Höhe von 7 mm. An jedem Ende des Arms war ein Gasauslass angebracht, der einen Durchmesser von 3 mm aufwies. Durch die Drehung des Rührers entstand ein Unterdruck derart, dass das über der Reaktionsmischung befindliche Gas ($CO_2$ und ggf. Formaldehyd) abgesaugt wurde und über die Hohlwelle des Rührers in die Reaktionsmischung eingeleitet wurde.

<u>Beispiel 1: Herstellung eines Carbonsäure-terminierten Polyethylenoxid-Polyoxymethylen-Block-Copolymers</u>

In Reaktor 1 wurde eine Suspension von 30,18 g (0,335 mol) 1,3,5-Trioxan und 0,62 g (1,92 mmol) 4-Dodecylbenzolsulfonsäure in 30 ml Undecan vorgelegt. Reaktor 2 enthielt eine Lösung von 430 mg (0,68 mmol) Dibutylzinndilaurat (DBTL) und 1,09 g (3,34 mmol) Caesiumcarbonat in 20,11 g (33,5 mmol) PET-1. Über eine Bypass-Leitung an MFC 1 wurde das gesamte System bei geöffneter Brücke mit 20 bar $CO_2$ beaufschlagt. Dann wurde die Brücke geschlossen und der Druck in Reaktor 1 über ein Gasauslassventil auf 5 bar reduziert. Das Reaktionsgemisch in Reaktor 1 wurde unter Rühren bei abgesperrter Brücke auf 65 °C geheizt und 1,5 Stunden bei dieser Temperatur gehalten. Anschließend wurde die Temperatur in Reaktor 1 auf 110 °C erhöht. Das Reaktionsgemisch in Reaktor 2 wurde unter Rühren auf 60 °C erwärmt. Die Temperatur der Brücke wurde auf 170 °C eingestellt. Nach Erreichen der Reaktionstemperatur wurde der Druck in Reaktor 2 auf einen Wert zwischen 17 und 19 bar eingestellt. Der Druck in Reaktor 1 wurde über den Bypass mit $CO_2$ auf 20 bar eingestellt. Die Bypass-Leitung wurde geschlossen und an den Massenflussreglern ein konstanter $CO_2$-Strom $\dot{V}_{in}$ = 160 ml/min eingestellt. Direkt im Anschluss wurde die Brücke geöffnet und der Gesamtdruck im System mit Hilfe von MFC 2 auf 20 bar eingestellt. Nach 3.2 h wurde die Brücke geschlossen, das System auf Raumtemperatur abgekühlt und der Druck separat in Reaktor 1 und Reaktor 2 abgelassen. Anschließend wurde in Reaktor 2 unter Rühren bei einer Innentemperatur von 40 °C mit einer HPLC-Pumpe bei einer Flussrate von 5 ml/min eine Lösung von 7,53 g (65,9 mmol) Glutarsäureanhydrid in 20 ml $CH_2Cl_2$ eingeführt. Nach beendeter Zugabe wurde das Reaktionsgemisch in Reaktor 2 bei 100 °C 16 h nachgerührt. Wiegen des Reaktors 2 vor der Entnahme des Produktes ergab für die Reaktion eine Gewichtszunahme von 3.39 g (Massendifferenz abzüglich der Masse des zugeführten Glutarsäureanhydrids), was einem Übertrag von 3,39 g (113 mmol) gasförmigen Formaldehyd entspricht. Aus Reaktor 2 wurden 30.92 g eines viskosen, farblosen Öls entnommen. Durch den Übertrag von 3,39 g (113 mmol) Formaldehyd wurde das als Oligomer eingesetzte PET-1 um durchschnittlich 3,4 Formaldehyd-Einheiten pro Molekül, bzw. 1,7 Formaldehyd-Einheiten pro Kettenende verlängert.

Viskosität: 1600 mPa·s

Säurezahl: 126,7 $mg_{KOH}/g$

Per Gel-Permeations-Chromatographie (GPC) gegen Polypropylenglykol-Standards wurde eine bimodale Molekulargewichtsverteilung beobachtet. Das zahlenmittlere Molekulargewicht der Gesamtprobe betrug $M_n$ = 819 g/mol und der Polydispersitätsindex PDI = 1,52. Für den niedermolekularen Anteil (< 1025 g/mol) betrug $M_n$ = 549 g/mol und der Polydispersitätsindex PDI = 1,11, für den höhermolekularen Anteil (> 1025 g/mol) betrug $M_n$ = 1727 g/mol und der Polydispersitätsindex PDI = 1,12.

$^{1}$H-NMR-Spektroskopie (400 MHz, $CDCl_3$): δ = 0,47-0.62 (m, 0,045 H), 0,92 (bs, 0,14 H), 1,49-1,65 (m, 0,47 H, $OC(O)CH_2CH_2C\underline{H}_2C(O)O$), 1,96-2,18 (m, 1 H, $OC(O)C\underline{H}_2CH_2C\underline{H}_2C(O)O$), 3,06-3,87 (m, 6,58 H, PET-1-$CH_2$), 4,41-4,59 (m, 0,28 H, $OCH_2O$), 4,79 (s, 0,26 H, $OCH_2O$), 4,95-5,08 (m, 0,32 H, $OCH_2O$), 5,39 (s, 0,03 H) ppm.

$^{13}$C-APT-NMR-Spektroskopie (400 MHz, $CDCl_3$): δ= 18,8 (+, $OC(O)CH_2\underline{C}H_2$), 18,9 (+, $OC(O)CH_2\underline{C}H_2$), 19,0 (+, $OC(O)CH_2\underline{C}H_2$), 19,0 (+, $OC(O)CH_2\underline{C}H_2$), 19,2 (+, $OC(O)CH_2\underline{C}H_2$), 21,8 (+), 28,4 (+), 28,7 (+), 17,3 (-), 31,0 (+), 32,0 (+, $OC(O)\underline{C}H_2CH_2$), 32,0 (+, $OC(O)\underline{C}H_2CH_2$), 32,1 (+, $OC(O)\underline{C}H_2CH_2$), 32,2 (+, $OC(O)\underline{C}H_2CH_2$), 32,3 (+, $OC(O)\underline{C}H_2CH_2$), 60,3 (+, PET-1-$CH_2$), 62,6 (+, PET-1-$CH_2$), 66,6 (+, PET-1-$CH_2$), 66,8 (+, PET-1-$CH_2$), 68,1 (+, PET-1-$CH_2$), 68,6 (+, PET-1-$CH_2$), 69,2 (+, PET-1-$CH_2$), 69,5 (+, PET-1-$CH_2$), 71,6 (+, PET-1-$CH_2$), 84,3 (+, O-$CH_2$-O), 84,7 (+, O-$CH_2$-O),85,7 (+, O-$CH_2$-O),87,8 (+, O-$CH_2$-O),88,3 (+, O-$CH_2$-O),88,3 (+, O-$CH_2$-O), 89,0 (+, O-$CH_2$-O),89,9 (+, O-$CH_2$-O),91,4 (+, O-$CH_2$-O),91,5 (+, O-$CH_2$-O),92,6 (+, O-$CH_2$-O), 93,1 (+, O-$CH_2$-O),171,5 (+, $\underline{C}(O)OCH_2$), 171,6 (+, $\underline{C}(O)OCH_2$), 172,0 (+, $\underline{C}(O)OCH_2$), 174,8 (+, $\underline{C}(O)OH$), 175,1 (+, $\underline{C}(O)OH$) ppm.

Das Auftreten einer Vielzahl an Signalen im $^{1}$H-NMR-Spektrum im Bereich 4,4 bis 5,1 ppm, sowie einer Vielzahl an Signalen mit positiver Polarität im $^{13}$C-APT-NMR-Spektrum im Bereich 83,3 bis 93,1 ppm zeigt das Vorliegen chemisch nicht-äquivalenter Oxymethylen-Gruppen in Blöcken ($CH_2O$). mit unterschiedlicher Kettenlängen.

Aus dem Vergleich der Signalintensitäten der $^{1}$H-NMR-Signale für Oxymethylengruppen $CH_2O$ ($I_{CH2O}$ = 0,86 H) mit den Signalintensitäten der $^{1}$H-NMR-Signale für PET-1-$CH_2$-Gruppen ($I_{PET-1}$ = 6,58 H) ergibt sich ein molares Verhältnis $CH_2O$: $(CH_2)_2O$ = $I_{CH2O}$ : $I_{PET-1}/2$ = 0,26. Bei einer durchschnittlichen Kettenlänge von 13,23 $(CH_2)_2O$-Einheiten pro Molekül ergibt dies durchschnittlich 3,44 Oxymethylen-Einheiten pro Molekül, bzw. 1,72 Oxymethylen-Einheiten pro Kettenende.

Aus dem Vergleich der Signalintensitäten der $^{1}$H-NMR-Signale für Glutarsäureester-Einheiten $OC(O)(CH_2)_3C(O)O$ ($I_{GSE}$ = 1,47 H) mit den $^{1}$H-NMR-Signalen für PET-1-$CH_2$-Gruppen ($I_{PET-1}$ = 6,58 H) ergibt sich ein molares Verhältnis $OC(O)(CH_2)_3C(O)O$ : $(CH_2)_2O$ = $I_{GSE}/3$ : $I_{PET-1}/2$ = 0,15. Bei einer durchschnittlichen Kettenlänge von 13,23 $(CH_2)_2O$-Einheiten pro Molekül ergibt dies durchschnittlich 1,98 Glutarsäureester-Einheiten pro Molekül. Die Reaktion der Polyoxymethylen-Block-Copolymer-Zwischenstufe mit Glutarsäureanhydrid verlief demnach mit einem Umsatz von 99%.

Das HMBC-NMR-Spektrum zeigte eine Fernkopplung eines PET-1-$^{13}$C-Signals bei 69,5 ppm zu $^{1}$H-Signalen im Bereich 4,95-5,08 ppm, welche laut HSQC-NMR-Spektroskopie direkte Kopplung zu $^{13}$C-Signalen bei ca. 85 und 89 ppm zeigten. Beide Signale besitzen im $^{13}$C-APT-NMR eine positive Polarität und können Oxymethylen-Gruppen zugeordnet werden. Weiterhin zeigte das HMBC-NMR-Spektrum eine Fernkopplung eines PET-1-$^{13}C$-Signals bei ca. 68 ppm zu $^{1}H$-Signalen im Bereich 4,41-4,59 ppm, welche laut HSQC-NMR-Spektroskopie direkte Kopplungen zu $^{13}C$-Signalen im Bereich 84-93 ppm zeigten. Alle diese $^{13}C$-Signale besitzen im $^{13}C$-APT-NMR eine positive Polarität und können Oxymethylen-Gruppen zugeordnet werden. Die $^{13}C$-Signale der Oxymethylen-Gruppen bei ca. 89 ppm zeigten eine Fernkopplung zu einem $^{1}H$-NMR-Signal bei ca. 3,4 ppm, welches den endständigen Methylengruppen des PET-1 zugeordnet werden kann. Damit wurde gezeigt, dass der Polyethylenoxid-Block des PET-1 kovalent mit dem Polyoxymethylen-Block verbunden ist.

Das HMBC-NMR-Spektrum zeigte eine Fernkopplung eines CO-$^{13}C$-Signals bei 172 ppm, welches der Glutarsäureester-Einheit zugeordnet werden kann, zu $^{1}H$-Signalen im Bereich 4,95-5,08 ppm, welche laut HSQC-NMR-Spektroskopie direkte Kopplung zu $^{13}C$-Signalen bei ca. 85 und 89 ppm zeigten. Beide Signale besitzen im $^{13}C$-APT-NMR eine positive Polarität und können Oxymethylen-Gruppen zugeordnet werden. Damit wurde gezeigt, dass die Glutarsäureester-Einheit kovalent mit dem Polyoxymethylen-Block verbunden ist.

Diese Fernkopplungen von einerseits PET-1-Endgruppen und andererseits Glutarsäureester-Einheiten zu chemisch nicht-äquivalenten Oxymethylen-Einheiten beweisen eindeutig, dass Polyoxymethylen-Blöcke $(CH_2O)_n$ mit unterschiedlicher Kettenlänge n vorliegen, die kovalent sowohl mit PET-1 als auch mit Glutarsäureester-Einheiten verbunden sind, welche aus der Reaktion mit Glutarsäureanhydrid stammen. Die Struktur der erfindungsgemäßen Polyoxymethylen-Block-Copolymere ist somit zweifelsfrei bewiesen.
ESI-MS (FTMS +p):

Im ESI-Massenspektrum wurden nachfolgend genannte Signalreihen identifiziert, die der folgenden allgemeinen Summenformel zugeordnet werden können:

$$[HOC(O)(CH_2)_3C(O)O\text{-}(CH_{2O})_a\text{-}(C_3H_6O)_m\text{-}(CH_2O)_b\text{-}C(O)(CH_2)_3C(O)OH\text{-}H]^+$$

Reihe 1 (a + b = 8): *m/z* (%) [m] = 839 (1) [8], 883 (5) [9], 927 (14) [10], 971 (28) [11], 1015 (42) [12], 1059 (48) [13], 1103 (46) [14], 1147 (37) [15], 1191 (27) [16], 1235 (19) [17], 1279 (16) [18], 1323 (15) [19], 1367 (17) [20].

Reihe 2 (a + b = 7): *m/z* (%) [m] = 809 (1) [8], 853 (5) [9], 897 (16) [10], 941 (35) [11], 985 (60) [12], 1029 (75) [13], 1073 (76) [14], 1117 (64) [15], 1161 (47) [16], 1205 (32) [17], 1249 (22) [18], 1293 (18) [19], 1337 (18) [20].

Reihe 3 (a + b = 6): *m/z* (%) [m] = 823 (5) [9], 867 (14) [10], 911 (38) [11], 955 (69) [12], 999 (93) [13], 1043 (100) [14], 1087 (87) [15], 1131 (64) [16], 1175 (42) [17], 1219 (27) [18], 1263 (18) [19], 1307 (13) [20].

Reihe 4 (a + b = 5): *m/z* (%) [m] = 793 (1) [9], 837 (5) [10], 881 (12) [11], 925 (26) [12], 969 (40) [13], 1013 (48) [14], 1057 (44) [15], 1101 (33) [16], 1145 (22) [17], 1189 (18) [18], 1233 (7) [19], 1277 (2) [20].

Reihe 5 (a + b = 4): *m/z* (%) [m] = 939 (1) [13], 983 (5) [14], 1027 (10) [15], 1071 (17) [16], 1115 (23) [17], 1159 (26) [18], 1203 (7) [25], 1247 (21) [20].

Reihe 6 (a + b = 3): *m/z* (%) [m] = 909 (2) [13], 953 (5) [14], 997 (14) [15], 1041 (26) [16], 1085 (38) [17], 1129 (45) [18], 1173 (21) [25], 1217 (37) [20].

Reihe 7 (a + b = 2): *m/z (%)* [m] = 879 (1) [13], 923 (6) [14], 967 (15) [15], 1011 (33) [16], 1055 (51) [17], 1099 (61) [18], 1143 (62) [25], 1187 (52) [20].

Reihe 8 (a + b = 1): *m/z* (%) [m] = 849 (1) [13], 893 (3) [14], 937 (8) [15], 981 (19) [16], 1025 (33) [17], 1069 (44) [18], 1113 (46) [25], 1157 (40) [20].

Weiterhin zeigt das ESI-Massenspektrum Signale für erfindungsgemäße Block-Copolymere, welche Polyethylenoxid-Einheiten, Polyoxymethylen-Einheiten und drei Glutarsäureester-Einheiten enthalten, und die der folgenden allgemeinen Summenformel zugeordnet werden können:

$$[HOC(O)(CH_2)_3C(O)O\text{-}(CH_2O)_a\text{-}(C_3H_6O)_m\text{-}(CH_2O)_b\text{-}C(O)(CH_2)_3C(O)O\text{-}(CH_2O)_c\text{-}(C_3H_6O)_n\text{-}(CH_2O)_d\text{-}C(O)(CH_2)_3C(O)O\text{-}H]^-$$

Reihe 9 (a + b + c + d = 3): *mlz* (%) [m+n] = 909 (1) [10], 953 (5) [11], 997 (14) [12], 1041 (27) [13], 1085 (38) [14],

1129 (45) [15], 1173 (44) [16], 1217 (37) [17], 1261 (29) [18], 1305 (21) [19], 1349 (19) [20], 1393 (20) [21], 1437 (26) [22], 1481 (32) [23], 1525 (39) [24], 1569 (45) [25], 1613 (49) [26], 1657 (49) [27], 1701 (45) [28], 1745 (39) [29], 1789 (32) [30], 1833 (25) [31], 1877 (17) [32], 1921 (12) [33], 1965 (8) [34], 2009 (5) [35], 2053 (5) [36], 2097 (2) [37].

Reihe 10 (a + b + c + d = 2): *m*/*z* (%) [m+n] = 879 (1) [10], 923 (6) [11], 967 (15) [12], 1011 (33) [13], 1055 (51) [14], 1099 (61) [15], 1143 (62) [16], 1187 (52) [17], 1231 (41) [18], 1275 (28) [19], 1319 (22) [20], 1363 (20) [21], 1407 (22) [22], 1451 (26) [23], 1495 (31) [24], 1539 (35) [25], 1583 (38) [26], 1627 (38) [27], 1671 (35) [28], 1715 (30) [29], 1759 (25) [30], 1803 (18) [31], 1847 (13) [32], 1891 (9) [33], 1935 (6) [34], 1979 (4) [35], 2023 (2) [36], 2067 (1) [37].

Reihe 11 (a + b + c + d = 1): *m*/*z* (%) [m+n] = 849 (1) [10], 893 (3) [11], 937 (9) [12], 981 (19) [13], 1025 (38) [14], 1069 (44) [15], 1113 (46) [16], 1157 (40) [17], 1201 (17) [18], 1245 (22) [19], 1289 (16) [20], 1333 (12) [21], 1377 (10) [22], 1421 (10) [23], 1465 (12) [24], 1509 (14) [25], 1553 (15) [26], 1597 (14) [27], 1641 (14) [28], 1685 (12) [29], 1729 (10) [30], 1773 (8) [31], 1817 (6) [32], 1861 (4) [33], 1905 (3) [34], 1979 (4) [35].

Das ESI-Massenspektrum zeigt, dass Polymere mit Molekulargewichten < 4500 g/mol erhalten wurden, die neben Polyethylenoxid-Einheiten $(C_3H_6O)_m$ mindestens einen Polyoxymethylen-Block $(CH_2O)_a$ mit $a \geq 1$ und mindestens zwei Glutarsäureester-Einheiten enthalten und somit den erfindungsgemäßen funktionalisierten niedermolekularen Polyoxymethylen-Block-Copolymere entsprechen.

IR-Spektroskopie: ν = 2870 (vb), 1732 (b, ν[C=O]), 1452 (w), 1411 (vw), 1349 (w), 1295 (vw), 1246 (w), 1093 (m), 994 (vw), 928 (m), 846 (w), 523 (w) $cm^{-1}$.

Das IR-Spektrum ist weder identisch mit dem IR-Spektrum von Paraformaldehyd, noch mit dem IR-Spektrum von PET-1. Die C=O-Streckschwingung bei 1732 $cm^{-1}$ kann den Glutarsäureester-Einheiten zugeordnet werden und ist nicht identisch mit der C=O-Streckschwingung von Glutarsäureanhydrid. Das Auftreten dieser Bande beweist, dass die Umsetzung der terminalen OH-Gruppen mit Glutarsäureanhydrid erfolgreich war.

Das erfindungsgemäße Beispiel 1 zeigt demgemäß die Herstellung eines Polyoxymethylen-Block-Copolymers und anschließende Umsetzung der OH-funktionellen Endgruppen des erhaltenen Polymers zu Carboxylat-Gruppen.

Beispiel 2: Herstellung eines Carbonsäure-terminierten Polyethylenoxid-Polyoxymethylen-Block-Copolymers

In Reaktor 1 wurde eine Suspension von 29,83 g (0,331 mol) 1,3,5-Trioxan und 0,52 g (1,6 mmol) 4-Dodecylbenzolsulfonsäure in 30 ml Undecan vorgelegt. Reaktor 2 enthielt ein Gemisch aus 460 mg (0,73 mmol) Dibutylzinndilaurat (DBTL), 22,6 g (69,5 mmol) Caesiumcarbonat und 20,5 g (34,2 mmol) PET-1. Über eine Bypass-Leitung an MFC 1 wurde das gesamte System bei geöffneter Brücke mit 20 bar $CO_2$ beaufschlagt. Dann wurde die Brücke geschlossen und der Druck in Reaktor 1 über ein Gasauslassventil auf 5 bar reduziert. Das Reaktionsgemisch in Reaktor 1 wurde unter Rühren bei abgesperrter Brücke auf 65 °C geheizt und 1,5 Stunden bei dieser Temperatur gehalten. Das Reaktionsgemisch in Reaktor 2 wurde unter Rühren auf 60 °C erwärmt. Die Temperatur der Brücke wurde auf 170 °C eingestellt. Nachdem das Reaktionsgemisch in Reaktor 1 1,5 Stunden auf 65 °C temperiert worden war, wurde der Druck über den Bypass mit $CO_2$ auf 20 bar eingestellt. Der Druck in Reaktor 2 wurde auf einen Wert zwischen 17 und 19 bar eingestellt. Die Bypass-Leitung wurde geschlossen und an den Massenflussreglern ein konstanter $CO_2$-Strom $\dot{V}_{in}$ = 160 ml/ min eingestellt. Der Gesamtdruck im System wurde über den weiteren Versuchsverlauf mit Hilfe von MFC 2 konstant auf 20 bar gehalten. Dann wurde die Temperatur in Reaktor 1 unter konstantem $CO_2$-Strom bei geöffneter Brücke auf 110°C erhöht. Nach 6 h wurde die Brücke geschlossen und Reaktor 2 auf 40 °C abgekühlt. Anschließend wurde in Reaktor 2 unter Rühren bei einer Innentemperatur von 40 °C mit einer HPLC-Pumpe bei einer Flussrate von 5 ml/min eine Lösung von 7,53 g (65,9 mmol) Glutarsäureanhydrid in 20 ml 1,4-Dioxan eingeführt. Nach beendeter Zugabe wurde das Reaktionsgemisch in Reaktor 2 bei 100°C 16 h nachgerührt. Anschließend wurde das System auf Raumtemperatur abgekühlt und der Druck in Reaktor 1 und 2 separat abgelassen. Aus Reaktor 2 wurde ein viskoses, farblosen Öls entnommen.

Viskosität: Das Produkt zeigte im Scherratenbereich von 10 bis 162 $s^{-1}$ ein scherverdickendes Verhalten und im Scherratenbereich von 162 bis 1000 $s^{-1}$ ein scherverdünnendes Verhalten.

Viskosität bei Scherrate 10 $s^{-1}$: 3056 mPa·s

Viskosität bei Scherrate 162 $s^{-1}$: 3173 mPa·s

Viskosität bei Scherrate 1000 $s^{-1}$: 2986 mPa·s

$^1$H-NMR-Spektroskopie (400 MHz, $CDCl_3$): δ = 0,75-0,88 (m, 0,359 H), 1,12-1,27 (m, 1,082 H), 1,78-1,96 (m, 2,988

H, $-C(O)CH_2C\underline{H}_2CH_2C(O)OH$), 2,20-2,43 (m, 6,099 H, $-C(O)C\underline{H}_2CH_2C\underline{H}_2C(O)OH$), 3,36-3,44 (m, 0,311 H, PET-1-$CH_2$), 3,44-3,69 (m, 45,87 H, PET-1-$CH_2$), 3,69-3,80 (m, 2,148 H, PET-1-$CH_2$), 4,10-4,20 (m, 0,656 H), 4,70-4,80 (m, 1,595 H, $OCH_2O$), 4,80-4,90 (m, 1,602 H, $OCH_2O$), 5,09 (s, 0,433 H, $OCH_2O$), 5,19-5,26 (m, 1,112 H, $OCH_2O$), 5,26-5,31 (m, 0,999 H, $OCH_2O$), 9,17 (bs, 1,859 H) ppm.

Das Auftreten einer Vielzahl an Signalen im $^1H$-NMR-Spektrum im Bereich 4,7 bis 5,3 ppm zeigt das Vorliegen chemisch nicht-äquivalenter Oxymethylen-Gruppen in Blöcken $(CH_2O)_n$ mit unterschiedlicher Kettenlängen.

Aus dem Vergleich der Signalintensitäten der $^1H$-NMR-Signale für Oxymethylengruppen $CH_2O$ ($I_{CH2O}$ = 5,74 H) mit den Signalintensitäten der $^1H$-NMR-Signale für PET-1-$CH_2$-Gruppen ($I_{PET-1}$ = 48,33 H) ergibt sich ein molares Verhältnis $CH_2O$: $(CH_2)_2O$ = $I_{CH2O}$ : $I_{PET-1}/2$ = 0,24. Bei einer durchschnittlichen Kettenlänge von 13,23 $(CH_2)_2O$-Einheiten pro Molekül ergibt dies durchschnittlich 3,16 Oxymethylen-Einheiten pro Molekül.

Aus dem Vergleich der Signalintensitäten der $^1H$-NMR-Signale für Glutarsäureester-Einheiten $OC(O)(CH_2)_3C(O)O$ ($I_{GSE}$ = 9,09 H) mit den $^1H$-NMR-Signalen für PET-1-$CH_2$-Gruppen ($I_{PET-1}$ = 48,33 H) ergibt sich ein molares Verhältnis $OC(O)(CH_2)_3C(O)O$ : $(CH_2)_2O$ = $I_{GSE}/3$ : $I_{PET-1}/2$ = 0,13. Bei einer durchschnittlichen Kettenlänge von 13,23 $(CH_2)_2O$-Einheiten pro Molekül ergibt dies durchschnittlich 1,72 Glutarsäureester-Einheiten pro Molekül. Die Reaktion der Polyoxymethylen-Block-Copolymer-Zwischenstufe mit Glutarsäureanhydrid verlief demnach mit einem Umsatz von 86%.

IR-Spektroskopie: ν = 2867 (m), 1732 (m, ν[C=O]), 1558 (vw), 1452 (w), 1412 (w), 1350 (w), 1291 (w), 1247 (w), 1097 (vs), 1040 (m), 995 (m), 946 (m), 871 (m), 848 (m), 614 (vw), 523 (w) $cm^{-1}$.

Das IR-Spektrum ist weder identisch mit dem IR-Spektrum von Paraformaldehyd, noch mit dem IR-Spektrum von PET-1. Die C=O-Streckschwingung bei 1732 $cm^{-1}$ kann den Glutarsäureester-Einheiten zugeordnet werden und ist nicht identisch mit der C=O-Streckschwingung von Glutarsäureanhydrid. Das Auftreten dieser Bande beweist, dass die Umsetzung der terminalen OH-Gruppen mit Glutarsäureanhydrid erfolgreich war.

Das erfindungsgemäße Beispiel 2 zeigt demgemäß die Herstellung eines Polyoxymethylen-Block-Copolymers und anschließende Umsetzung der OH-funktionellen Endgruppen des erhaltenen Polymers zu Carboxylat-Gruppen.

Beispiel 3: Umsetzung des in Beispiel 2 erhaltenen Carbonsäure-terminierten Polyethylenoxid-Polyoxymethylen-Block-Copolymers mit Isocyanat 1

In einem Becherglas wurden 5,02 g des in Beispiel 2 erhaltenen Carbonsäure-terminierten Polyethylenoxid-Polyoxymethylen-Block-Copolymers, 0,25 ml Wasser und 10,3 mg (0,016 mmol) Dibutylzinndilaurat (DBTL) vorgelegt und das Gemisch auf 60 °C erwärmt. Anschließend wurden unter Rühren 0,62 g Isocyanat 1 zugegeben und das Gemisch intensiv gerührt. Nach 3 s wurde eine starke Schaumbildung beobachtet, welche nach 20 s abgeklungen war. Es wurde ein gelbes Gel erhalten.

Das erhaltene Produkt war im Gegensatz zu den Einsatzstoffen unlöslich in Dichlormethan und THF. Dies zeigte, dass durch Umsetzung mit Isocyanat 1 ein höhermolekulares, unlösliches Polymer erhalten wurde.

Viskosität: Das Produkt zeigte ein scherverdünnendes Verhalten.

Viskosität bei Scherrate 0,01 $s^{-1}$: 10500 mPa·s

Viskosität bei Scherrate 927 $s^{-1}$: 8684 mPa·s

Die Viskosität war gegenüber dem in Beispiel 2 erhaltenen und hier eingesetzten Carbonsäure-terminierten Polyethylenoxid-Polyoxymethylen-Block-Copolymer (Viskosität zwischen 2986 und 3173 mPa·s) im gesamten Scherraten-Messbereich deutlich erhöht. Dies zeigte, dass eine Umsetzung mit Isocyanat 1 zu einem höhermolekularen Polymer erfolgreich war.

Beispiel 3 belegt somit die Umsetzung eines Carbonsäure-terminierten Polyoxymethylen-Block-Copolymers mit einem Diisocyanat zu einem höhermolekularen Polymer.

Beispiel 4: Umsetzung des in Beispiel 2 erhaltenen Carbonsäure-terminierten Polyethylenoxid-Polyoxymethylen-Block-Copolymers mit Phenylglycidylether

In einen Glaskolben wurden 5,04 g des in Beispiel 2 erhaltenen Carbonsäure-terminierten Polyethylenoxid-Polyoxymethylen-Block-Copolymers mit 26,7 mg (0,102 mmol) Triphenylphosphin und 1,41 g (9,39 mmol) Phenylglycidylether (PGE) eingewogen und unter Rückfluss 18 h bei 80 °C gerührt, wobei sich das Gemisch von gelb zu dunkelrot verfärbte. Das Produkt wurde wie erhalten weiter eingesetzt.

Viskosität: Das Produkt zeigte ein scherverdünnendes Verhalten.

Viskosität bei Scherrate 0,01 $s^{-1}$: 3890 mPa·s

Viskosität bei Scherrate 589 $s^{-1}$: 3658 mPa·s

Viskosität bei Scherrate 1000 $s^{-1}$: 3574 mPa·s

$T_g$ = -42,59 °C
$^1$H-NMR-Spektroskopie (400 MHz, $CDCl_3$): δ = 0,79-0,88 (m, 0,135 H), 1,15-1,30 (m, 0,465 H), 1,81-2,01 (m, 1,971 H, $-C(O)CH_2\underline{CH_2}CH_2C(O)-$), 2,17-2,49 (m, 3,892 H, $-C(O)\underline{CH_2}CH_2\underline{CH_2}C(O)-$), 3,38-3,45 (m, 0,181 H), 3,45-3,72 (m, 29,28 H, PET-1-$\underline{CH_2}$), 3,72-3,88 (m, 1,301 H, PET-$CH_2$), 3,91-4,02 (m, 1,622 H), 4,02-4,36 (m, 5,773 H, PGE-CH/PGE/$CH_2$), 4,36-4,50 (0,257 H), 4,74-4,82 (m, 0,256 H, $OCH_2O$), 4,82-4,89 (m, 0,243 H, $OCH_2O$), 5,12 (s, 0,187 H, $OCH_2O$), 5,15-5,39 (m, 0,956 H), $OCH_2O$),6,80-6,97 (m, 3,000 H, PGE-$CH_{ar}$), 7,17-7,39 (m, 2,160 H, PGE-$CH_{ar}$/$CHCl_3$), 7,39-7,48 (m, 0,105 H, $PPh_3$), 7,48-7,55 (m, 0,0458 H, $PPh_3$), 7,57-7,67 (m, 0,0896 H, $PPh_3$) ppm.

Das $^1$H-NMR-Spektrum zeigte neue Signale im Bereich 4,02-4,38 ppm sowie im aromatischen Bereich (6,80-7,39 ppm), die auf den Einbau von Phenylglycidolether in Form von 2-Hydroxy-3-Phenoxypropyloxy-Gruppen PhO-$CH_2$-CH(OH)-$CH_2$-O- (zugeordnet als PGE-$CH_2$ bzw. PGE-CH und PGE-$CH_{ar}$) hinwiesen. Das Verhältnis der Integrale für PGE-$CH_{ar}$ (6,80-6,97 ppm, 3 H) und $-C(O)CH_2CH_2CH_2C(O)-$ (1,81-2,01 ppm, 1,971 H) zeigte, dass die Umsetzung der terminalen Carbonsäuregruppen mit Phenylglycidylether quantitativ verlief.

<u>Beispiel 5: Umsetzung des in Beispiel 4 erhaltenen Hydroxy-funktionalisierten Polvethvlenoxid-Polyoxymethylen-Block-Copolymers mit Isocyanat 1</u>

In einem Becherglas wurden 4,13 g des in Beispiel 4 erhaltenen Hydroxy-funktionalisierten Polyethylenoxid-Polyoxymethylen-Block-Copolymers, 0,25ml Wasser und 8,0 mg (0,013 mmol) DBTL vorgelegt und das Gemisch auf 60 °C erwärmt. Anschließend wurden unter Rühren 0,62 g Isocyanat 1 zugegeben und das Gemisch intensiv gerührt. Nach 4 s wurde eine starke Schaumbildung beobachtet, welche nach 20 s abgeklungen war. Es wurde ein braunes Gel erhalten.

Das erhaltene Produkt war im Gegensatz zu den Einsatzstoffen unlöslich in Dichlormethan und THF. Dies zeigte, dass durch Umsetzung mit Isocyanat 1 ein höhermolekulares, unlösliches Polymer erhalten wurde.

Viskosität: Das Produkt zeigte ein scherverdünnendes Verhalten.

Viskosität bei Scherrate 3,35 $s^{-1}$: 1447000 mPa·s

Viskosität bei Scherrate 1000 $s^{-1}$: 31950 mPa·s

Die Viskosität war gegenüber dem in Beispiel 4 erhaltenen und hier eingesetzten Hydroxy-funktionalisierten Polyethylenoxid-Polyoxymethylen-Block-Copolymer (Viskosität zwischen 3574 und 3890 mPa·s) im gesamten Scherraten-Messbereich deutlich erhöht. Dies zeigte, dass eine Umsetzung mit Isocyanat 1 zu einem höhermolekulare Polymer erfolgreich war.
$T_g$ = -29,41 °C

Gegenüber dem in Beispiel 4 erhaltenen und hier eingesetzten Hydroxy-funktionalisierten Polyethylenoxid-Polyoxymethylen-Block-Copolymer ($T_g$ = -42,59°C) war die Glasübergangstemperatur nach Umsetzung mit Isocyanat 1 deutlich erhöht. Dies zeigte, dass die Umsetzung des Hydroxy-funktionalisierten Polyethylenoxid-Polyoxymethylen-Block-Copolymers mit Isocyanaten erfolgreich war.

Nach der Umsetzung des in Beispiel 4 erhaltenen Hydroxy-funktionalisierten Polyethylenoxid-Polyoxymethylen-Block-Copolymer mit Isocyanat 1 waren Viskosität und Glasübergangstemperatur deutlich erhöht. Dies zeigte, dass eine Umsetzung mit Isocyanat 1 zu einem höhermolekularen Polyurethan-Polymer stattgefunden hatte.

Die Beispiele 4 und 5 belegen somit die Umsetzung eines Carbonsäure-terminierten <u>Polyethylenoxid-Polyoxymethylen-Block-Copolymers</u> mit Epoxiden zu einem Hydroxy-funktionalisierten Polyethylenoxid-Polyoxymethylen-Block-Copolymer und dessen anschließende Umsetzung mit einem Diisocyanat zu einem Polyurethan-Polymer.

## Patentansprüche

1. Verfahren zur Herstellung von funktionalisierten Polyoxymethylen-Block-Copolymeren, umfassend den Schritt der

Polymerisation von Formaldehyd in einem Reaktionsgefäß in Gegenwart eines Katalysators,
**dadurch gekennzeichnet, dass**
die Polymerisation von Formaldehyd weiterhin in Gegenwart einer Starterverbindung mit mindestens 2 Zerewitinoff-aktiven H-Atomen, welche ein zahlenmittleres Molekulargewicht von ≥ 62 g/mol bis ≤ 4470 g/mol aufweist, erfolgt, wobei ein Zwischenprodukt mit einem zahlenmittleren Molekulargewicht von < 4500 g/mol erhalten wird, und dass das erhaltene Zwischenprodukt mit einem zyklischen Carbon- oder Kohlensäureester umgesetzt wird, wobei ein funktionalisiertes Polyoxymethylen-Block-Copolymer erhalten wird.

**2.** Verfahren gemäß Anspruch 1, wobei der Katalysator ausgewählt ist aus der Gruppe der basischen Katalysatoren und/oder der Lewis-sauren Katalysatoren.

**3.** Verfahren gemäß einem oder mehreren der Ansprüche 1 oder 2, wobei die Umsetzung des Zwischenprodukts mit dem zyklischen Carbon- oder Kohlensäureester in Gegenwart eines Katalysators durchgeführt wird, welcher der gleiche Katalysator wie in der vorangegangenen Polymerisation von Formaldehyd ist.

**4.** Verfahren gemäß einem oder mehreren der Ansprüche 1 bis 3, wobei das Startermolekül ein zahlenmittleres Molekulargewicht von ≥ 100 g/mol bis ≤ 3000 g/mol aufweist.

**5.** Verfahren gemäß einem oder mehreren der Ansprüche 1 bis 4, wobei das Startermolekül ausgewählt ist aus der Gruppe der Polyetherpolyole, Polyesterpolyole, Polyetheresterpolyole, Polycarbonatpolyole und/oder Polyacrylatpolyole.

**6.** Verfahren gemäß einem oder mehreren der Ansprüche 1 bis 5, wobei der zyklische Carbon- oder Kohlensäureester ausgewählt ist aus der Gruppe der aliphatischen oder aromatischen Lactone, Lactide, zyklische Carbonate und/oder zyklische Anhydride.

**7.** Verfahren gemäß einem oder mehreren der Ansprüche 1 bis 6, wobei das Formaldehyd als gasförmiges Formaldehyd in das Reaktionsgefäß eingetragen wird.

**8.** Verfahren gemäß einem oder mehreren der Ansprüche 1 bis 7, wobei die Polymerisation weiterhin in Gegenwart eines Co-Monomers erfolgt.

**9.** Funktionalisierte Polyoxymethylen-Block-Copolymere, erhältlich durch ein Verfahren gemäß einem oder mehreren der Ansprüche 1 bis 8.

**10.** Funktionalisierte Polyoxymethylen-Block-Copolymere gemäß Anspruch 9 mit einem zahlenmittleren Molekulargewicht von ≤ 12 000 g/mol.

**11.** Funktionalisierte Polyoxymethylen-Block-Copolymere gemäß Anspruch 9 oder 10 mit einer Viskosität bei 20 °C von ≤ 100 000 mPa s.

**12.** Verwendung von funktionalisierten Polyoxymethylen-Block-Copolymeren gemäß einem oder mehreren der Ansprüche 9 bis 11 zur Herstellung von Polyamiden, Polyurethanen, Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen.

## Claims

**1.** Process for preparing functionalized polyoxymethylene block copolymers, comprising the step of polymerizing formaldehyde in a reaction vessel in the presence of a catalyst,
**characterized in that**
the polymerization of formaldehyde is additionally effected in the presence of a starter compound having at least 2 Zerewitinoff-active hydrogen atoms and having a number-average molecular weight of ≥ 62 g/mol to ≤ 4470 g/mol, giving an intermediate having a number-average molecular weight of < 4500 g/mol, and **in that**
the resultant intermediate is reacted with a cyclic carboxylic or carbonic ester, giving a functionalized polyoxymethylene block copolymer.

**2.** Process according to Claim 1, wherein the catalyst is selected from the group of the basic catalysts and/or the Lewis-acidic catalysts.

**3.** Process according to one or more of Claims 1 and 2, wherein the reaction of the intermediate with the cyclic carboxylic or carbonic ester is conducted in the presence of a catalyst which is the same catalyst as in the preceding polymerization of formaldehyde.

**4.** Process according to one or more of Claims 1 to 3, wherein the starter molecule has a number-average molecular weight of ≥ 100 g/mol to ≤ 3000 g/mol.

**5.** Process according to one or more of Claims 1 to 4, wherein the starter molecule is selected from the group of the polyether polyols, polyester polyols, polyether ester polyols, polycarbonate polyols and/or polyacrylate polyols.

**6.** Process according to one or more of Claims 1 to 5, wherein the cyclic carboxylic or carbonic ester is selected from the group of the aliphatic or aromatic lactones, lactides, cyclic carbonates and/or cyclic anhydrides.

**7.** Process according to one or more of Claims 1 to 6, wherein the formaldehyde is introduced into the reaction vessel as gaseous formaldehyde.

**8.** Process according to one or more of Claims 1 to 7, wherein the polymerization is additionally effected in the presence of a comonomer.

**9.** Functionalized polyoxymethylene block copolymers obtainable by a process according to one or more of Claims 1 to 8.

**10.** Functionalized polyoxymethylene block copolymers according to Claim 9 having a number-average molecular weight of ≤ 12 000 g/mol.

**11.** Functionalized polyoxymethylene block copolymers according to Claim 9 or 10 having a viscosity at 20°C of ≤ 100 000 mPa s.

**12.** Use of functionalized polyoxymethylene block copolymers according to one or more of Claims 9 to 11 for production of polyamides, polyurethanes, washing and cleaning composition formulations, drilling fluids, fuel additives, ionic and nonionic surfactants, lubricants, process chemicals for papermaking or textile production, or cosmetic formulations.

**Revendications**

**1.** Procédé de fabrication de copolymères séquencés de polyoxyméthylène fonctionnalisés, comprenant l'étape de polymérisation de formaldéhyde dans un récipient de réaction en présence d'un catalyseur,
**caractérisé en ce que**
la polymérisation de formaldéhyde a en outre lieu en présence d'un composé de départ comprenant au moins 2 atomes H actifs selon Zerewitinoff, qui présente un poids moléculaire moyen en nombre de ≥ 62 g/mol à ≤ 4 470 g/mol, un produit intermédiaire ayant un poids moléculaire moyen en nombre < 4 500 g/mol étant obtenu, et **en ce que** le produit intermédiaire obtenu est mis en réaction avec un ester d'acide carboxylique ou carbonique cyclique, un copolymère séquencé de polyoxyméthylène fonctionnalisé étant obtenu.

**2.** Procédé selon la revendication 1, dans lequel le catalyseur est choisi dans le groupe constitué par les catalyseurs basiques et/ou les catalyseurs acides de Lewis.

**3.** Procédé selon une ou plusieurs des revendications 1 ou 2, dans lequel la mise en réaction du produit intermédiaire avec l'ester d'acide carboxylique ou carbonique cyclique est réalisée en présence d'un catalyseur, qui est le même catalyseur que dans la polymérisation précédente de formaldéhyde.

**4.** Procédé selon une ou plusieurs des revendications 1 à 3, dans lequel la molécule de départ présente un poids moléculaire moyen en nombre de ≥ 100 g/mol à ≤ 3 000 g/mol.

**5.** Procédé selon une ou plusieurs des revendications 1 à 4, dans lequel la molécule de départ est choisie dans le

groupe constitué par les polyéther-polyols, les polyester-polyols, les polyéther-ester-polyols, les polycarbonate-polyols et/ou les polyacrylate-polyols.

**6.** Procédé selon une ou plusieurs des revendications 1 à 5, dans lequel l'ester d'acide carboxylique ou carbonique cyclique est choisi dans le groupe constitué par les lactones aliphatiques ou aromatiques, les lactides, les carbonates cycliques et/ou les anhydrides cycliques.

**7.** Procédé selon une ou plusieurs des revendications 1 à 6, dans lequel le formaldéhyde est introduit dans le récipient de réaction sous la forme de formaldéhyde gazeux.

**8.** Procédé selon une ou plusieurs des revendications 1 à 7, dans lequel la polymérisation a en outre lieu en présence d'un comonomère.

**9.** Copolymères séquencés de polyoxyméthylène fonctionnalisés, pouvant être obtenus par un procédé selon une ou plusieurs des revendications 1 à 8.

**10.** Copolymères séquencés de polyoxyméthylène fonctionnalisés selon la revendication 9, ayant un poids moléculaire moyen en nombre ≤ 12 000 g/mol.

**11.** Copolymères séquencés de polyoxyméthylène fonctionnalisés selon la revendication 9 ou 10, ayant une viscosité à 20 °C ≤ 100 000 mPa s.

**12.** Utilisation de copolymères séquencés de polyoxyméthylène fonctionnalisés selon une ou plusieurs des revendications 9 à 11 pour la fabrication de polyamides, de polyuréthanes, de formulations de détergents, de fluides de forage, d'additifs pour carburants, de tensioactifs ioniques et non ioniques, de lubrifiants, de produits chimiques de procédé pour la fabrication de papier ou de textile ou de formulations cosmétiques.

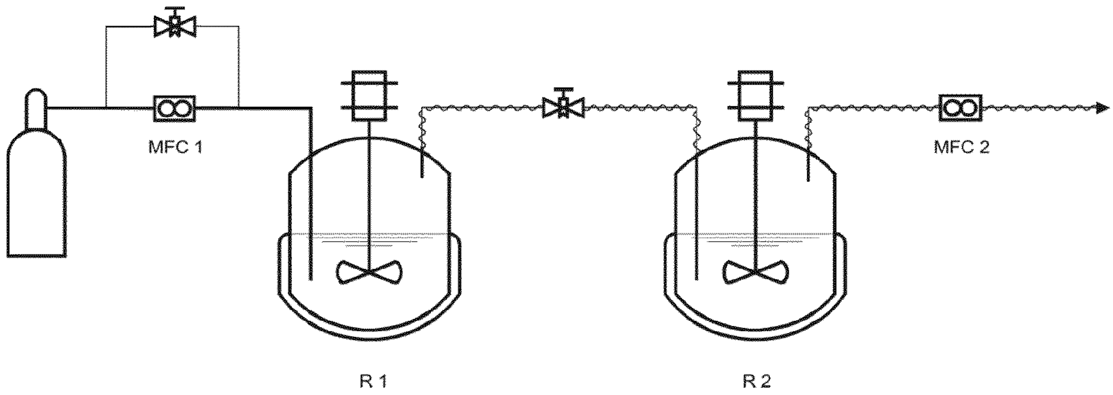


FIG. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2007211082 A
- GB 807589 A
- US 3979479 A
- US 3218295 A
- EP 1418190 A1
- US 3754053 A
- US 20020016395 A
- JP 4306215 A
- US 3575930 A